# EUROPEAN PATENT APPLICATION

(11) **EP 4 023 427 A1**
(43) Date of publication of application: **06.07.2022**
(21) Application number: 20858902.8
(22) Date of filing: 24.08.2020
(51) Int. Cl.: B32B 5/10, B32B 5/28, B32B 27/04, B32B 27/12, B32B 27/18, C08J 5/04, B29C 43/20, B29C 43/34, B29C 70/18, B29C 70/42, B29C 70/46, B29C 70/68, B29C 70/88

(54) **FIBER-REINFORCED-RESIN COMPOSITE MOLDED ARTICLE AND METHOD FOR PRODUCING SAME, ANTIBACTERIAL COMPOSITE MOLDED ARTICLE AND METHOD FOR PRODUCING SAME, ANTIBACTERIAL FIBER-REINFORCED-RESIN COMPOSITE MOLDED ARTICLE AND METHOD FOR PRODUCING SAME, AND FIBER-REINFORCED-RESIN LAMINATED MOLDED ARTICLE AND METHOD FOR PRODUCING SAME**

(30) Priority: 27.08.2019 JP 2019154490; 11.09.2019 JP 2019165131; 30.09.2019 JP 2019178952; 30.03.2020 JP 2020059957
(71) Applicant: Inoac Corporation, Nagoya-shi, Aichi 450-0003 (JP)
(72) Inventor: SUGIURA Yoshinori, Anjo-shi, Aichi 446-8504 (JP); TANABE Naoyuki, Kaizu-shi, Gifu 503-0536 (JP); OYABU Jun, Kaizu-shi, Gifu 503-0536 (JP)
(74) Representative: Berggren Oy
(86) International application number: PCT/JP2020/031851
(87) International publication number: WO 2021/039722

(57) **Abstract**

The present invention provides a fiber-reinforced-resin composite molded article including: a rigid layer (11) that is formed of a fiber-reinforced-resin material for a rigid layer; a shaping layer (21) that is formed, at least on one side of the rigid layer (11), of a shaping-layer compound composed of a thermosetting resin and fibers that are shorter than fibers contained in the fiber-reinforced-resin material for a rigid layer; and a cured resin (31) being formed of a liquid-state resin that is deposited on the surface of the shaping layer (21). The fiber-reinforced-resin composite molded article has a structure in which the fiber-reinforced-resin material for a rigid layer, the shaping-layer compound, and the liquid-state resin are cured under heat and pressure in a layered state.

## Description

### Technical Field

The present disclosure relates to a fiber-reinforced-resin composite molded article and a method of producing the same. The present disclosure also relates to an antibacterial composite molded article, in which an antibacterial property is provided to a fiber-reinforced-resin molded article, and a method of producing the same. The present disclosure also relates to an antibacterial fiber-reinforced-resin composite molded article, in which a base material layer and an antibacterial foam layer are laminated and integrated, and a method for producing the same. The present disclosure further relates to a fiber-reinforced-resin laminated molded article and a method of producing the same.

### Background Art

Conventionally, a fiber-reinforced-resin molded article has been used in a wide range of industrial fields such as sports, leisure, and aircrafts due to high strength and high rigidity thereof. As a method of producing the fiber-reinforced-resin molded article, compression molding of pre-preg, in which a reinforced fiber is impregnated with a thermosetting resin, a sheet molding compound, or the like is used in many fields.

Pre-preg uses a long fiber as the reinforcing fiber. Thus, while a molded article with high strength and high rigidity is obtained, it is difficult to shape the pre-preg into a complex shape. In contrast, the sheet molding compound uses a short fiber as the reinforcing fiber. Thus, although strength of the molded product is lower than that formed of the pre-preg, the sheet molding compound has excellent flowability during molding and can easily be formed into a complex shape such as a rib or a boss.

In addition, in order to maintain the rigidity by incorporating advantages of both of the pre-preg and the sheet molding compound and to enable forming of the complex shape, it has been proposed to laminate the pre-preg and the sheet molding compound be laminated and subject the laminated pre-preg and sheet molding compound to compression molding (Patent Literature 1).

The fiber-reinforced-resin molded article is produced by thermocompression of a fiber-reinforced-resin material such as the pre-preg or the sheet molding compound (SMC), in which a reinforced fiber is impregnated with the thermosetting resin. In particular, in the case where the fiber-reinforced-resin molded article is requested to have the complex shape such as the rib or the boss, the sheet molding compound is frequently used due to ease of molding.

In recent years, applications requiring an antibacterial property in the fiber-reinforced-resin molded article have been increasing. A common method of imparting the antibacterial property to the fiber-reinforced-resin molded article is to add an antibacterial agent to a matrix resin (the thermosetting resin) such as the pre-preg or the sheet molding compound. However, in the case where the antibacterial agent is added to the matrix resin, only a part of the added antibacterial agent appears on a surface of the molded article, and most of the added antibacterial agent exists inside the molded article. For this reason, an antibacterial effect is small on the surface of the molded article. As a result, a large amount of the antibacterial agent has to be added to increase the antibacterial property of the surface, and, in such a case, there are problems that the antibacterial agent is not uniformly mixed with the matrix resin, that moldability is degraded, and that cost is increased, and the like.

In addition, there are a method of coating the surface of the fiber-reinforced-resin molded article after molding with an antibacterial coating agent (Patent Literature 2) and a method of precisely positioning and placing a surface material including a sheet-like cured resin particle aggregate, to which the antibacterial property is added, in a mold and then placing and molding a molding material such as the sheet molding compound thereon (Patent Literature 3).

### Prior Art Document

### Patent Literature

Patent Literature 1: Japanese Laid-open Patent Application Publication No. 2009-083441
Patent Literature 2: Japanese Laid-open Patent Application publication No. Hei 11-228908
Patent Literature 3: Japanese Laid-open Patent Application Publication No. 2003-12707

### SUMMARY OF INVENTION

### Technical Problem

However, in the composite molded article in which the pre-preg and the sheet molding compound are laminated and subjected to the compression molding, a thickness of a layer formed of the sheet molding compound can only be reduced to about 70% of the thickness of the sheet molding compound prior to the compression molding. Accordingly, a thickness of the entire molded product cannot be reduced, and a thin molded article having the rigidity and capable of being formed into the complex shape cannot be obtained.

The present disclosure has been made in view of the above points and therefore has a purpose of providing a fiber-reinforced-resin composite molded article that has rigidity and can be formed into a complex shape and be thin, and a method of producing the same.

In addition, the method of coating the surface of the fiber-reinforced-resin molded article after molding with the antibacterial coating agent requires, as post-steps, a coating step and a step of curing the antibacterial coating agent after molding the molded article, which is a factor of the cost increase.

In the method of precisely positioning and placing the surface material, to which the antibacterial property is added, in the mold and then placing and molding the molding material such as the sheet molding compound thereon, in the case where a flow length of the molding material in the mold is long, the surface material is possibly ruptured by the flow of the molding material. As a result, the favorable antibacterial property cannot be obtained.

The present disclosure has been made in view of the above point and therefore has a purpose of providing an antibacterial composite molded article having favorable antibacterial performance on a surface of a fiber-reinforced-resin molded article, and a method of producing capable of efficiently producing the antibacterial composite molded article.

In the method of precisely positioning and placing the surface material including the sheet-like hardened resin particle aggregate, to which the antibacterial property is added, in the mold and then placing and molding the molding material such as the sheet molding compound thereon, in the case where the flow length of the molding material in the mold is long, the surface material including the sheet-like hardened resin particle aggregate is possibly ruptured by the flow of the molding material. As a result, favorable external surface appearance and the favorable antibacterial property cannot be obtained.

The present disclosure has been made in view of the above point and therefore has a purpose of providing an antibacterial fiber-reinforced-resin composite molded article that has favorable external surface appearance and high antibacterial performance, and a method of producing the same.

In addition, a molded product that is formed by laminating and subjecting the pre-preg and the sheet molding compound to the compression molding is prone to disturbance (twisting) of the fiber in the pre-preg that is in contact with the sheet molding compound due to the flow of the sheet molding compound during the compression molding, which tends to cause a problem of external appearance.

In addition, a volatile from the sheet molding during the compression molding tends to accumulate at a boundary between the sheet molding compound and the pre-preg, which may cause a void or the like. The external appearance of the molded product is impaired by presence of the void or the like.

The present disclosure has been made in view of the above point and therefore has a purpose of providing a fiber-reinforced-resin laminated molded article that has favorable external appearance without disturbance of a fiber, a void, or the like even in a complex shape, and a method for producing the same.

### Solution to Problem

(1) The present disclosure relates to a fiber-reinforced-resin composite molded article including: a rigid layer formed from a fiber-reinforced-resin material for a rigid layer; a shaping layer formed, on at least one surface of the rigid layer, from a shaping-layer compound that is formed from a thermosetting resin and shorter fibers than fibers included in the fiber-reinforced-resin material for a rigid layer; and a cured resin formed by curing a liquid-state resin adhering to a surface of the shaping layer. The rigid layer and the shaping layer are formed by heating, compressing, and curing the fiber-reinforced-resin material for a rigid layer and the shaping-layer compound in a layered state together with the liquid-state resin.
(2) The present disclosure also relates to the fiber-reinforced-resin composite molded article in above (1) in which the fiber-reinforced-resin material for a rigid layer is pre-preg (pre-impregnated), the shaping-layer compound is a sheet molding compound, and the liquid-state resin is a thermosetting resin.
(3) The present disclosure relates to a method of producing a fiber-reinforced-resin composite molded article including: a rigid layer formed from a fiber-reinforced-resin material for a rigid layer; a shaping layer formed, on at least one surface of the rigid layer, from a shaping-layer compound that is formed from a thermosetting resin and shorter fibers than fibers included in the fiber-reinforced-resin material for a rigid layer; and a cured resin formed by curing a liquid-state resin adhering to a surface of the shaping layer. The method includes: applying the liquid-state resin to a surface of the shaping-layer compound or applying the liquid-state resin to a mold surface of a mold that presses against the surface of the shaping-layer compound at the time of clamping the mold; and heating, compressing, and curing the fiber-reinforced-resin material for a rigid layer and the shaping-layer compound in a layered state together with the liquid-state resin using the mold.
(4) The present disclosure also relates to the method of producing a fiber-reinforced-resin composite molded article in above (3) in which the fiber-reinforced-resin material for a rigid layer is pre-preg (pre-impregnated), the shaping-layer compound is a sheet molding compound, and the liquid-state resin is a thermosetting resin.
(5) The present disclosure relates to an antibacterial composite molded article including: a base material including a sheet-like fiber-reinforced-resin material that is compressed and cured; and an antibacterial resin provided on at least one surface side of the base material. The antibacterial resin is formed by heating, compressing, and curing a thermosetting resin containing an antibacterial agent in an integrated manner with the sheet-like fiber-reinforced-resin material.
(6) The present disclosure also relates to the antibacterial composite molded article in above (5) in which the sheet-like fiber-reinforced-resin material is formed from a sheet molding compound.
(7) The present disclosure also relates to the antibacterial composite molded article in above (5) or (6) in which an amount of the antibacterial agent on a surface of the antibacterial composite molded article is 0.1 g/m²to 8.0 g/m².
(8) The present disclosure relates to a method of producing an antibacterial composite molded article including: a base material including a sheet-like fiber-reinforced-resin material that is compressed and cured; and an antibacterial resin provided on at least one surface side of the base material. The method of producing an antibacterial composite molded article includes: adhering a thermosetting resin containing an antibacterial agent to at least one surface side of the sheet-like fiber-reinforced-resin material; and heating, compressing, and curing the sheet-like fiber-reinforced-resin material, to which the thermosetting resin containing the antibacterial agent is adhered. An antibacterial resin, which is formed by curing the thermosetting resin containing the antibacterial agent, is provided on the at least one surface side of the base material.
(9) The present disclosure also relates to the method of producing the antibacterial composite molded article in above (8) in which, the adhering includes applying the thermosetting resin containing the antibacterial agent to the at least one surface side of the sheet-like fiber-reinforced-resin material, so as to cause the thermosetting resin containing the antibacterial agent to adhere to the at least one surface side of the sheet-like fiber-reinforced-resin material, and the heating, compressing, and curing includes using a mold to heat, compress and cure the sheet-like fiber-reinforced-resin material, to which the thermosetting resin containing the antibacterial agent is adhered.
(10) The present disclosure also relates to the method of producing an antibacterial composite molded article in above (8) in which, the adhering includes applying the thermosetting resin containing the antibacterial agent to at least one mold surface of a mold, arranging the sheet-like fiber-reinforced-resin material in the mold, and bringing the thermosetting resin containing the antibacterial agent, which has been applied to the mold surface, into contact with the at least one surface side of the sheet-like fiber-reinforced-resin material so as to adhere thereto, and, the heating, compressing, and curing includes using the mold to heat, compress and cure the sheet-like fiber-reinforced-resin material, to which the thermosetting resin containing the antibacterial agent is adhered.
(11) The present disclosure also relates to the method of producing an antibacterial composite molded article in according to any one of above (8) to (10) in which the sheet-like fiber-reinforced-resin material is formed from a sheet molding compound.
(12) The present disclosure relates to an antibacterial fiber-reinforced-resin composite molded article having: a base material layer formed from a shaping compound that is formed from fibers and a first thermosetting resin; and an antibacterial foam layer formed from thermosetting resin foam impregnated with a second thermosetting resin containing an antibacterial agent. A concentration of the antibacterial agent in the second thermosetting resin containing the antibacterial agent is 0.2 wt% to 2.0 wt%, and the base material layer and the antibacterial foam layer are formed by integrating the shaping compound and the thermosetting resin foam impregnated with the second thermosetting resin containing the antibacterial agent in a layered state by thermocompression.
(13) The present disclosure also relates to the antibacterial fiber-reinforced-resin composite molded article in above (12) in which the antibacterial agent is formed by causing glass to carry a silver ion.
(14) The present disclosure also relates to the antibacterial fiber-reinforced-resin composite molded article in above (12) or (13) in which the shaping compound contains a curing agent, and the second thermosetting resin containing the antibacterial agent does not contain the curing agent.
(15) The present disclosure also relates to the antibacterial fiber-reinforced-resin composite molded article in any one of above (12) to (14) in which the second thermosetting resin is a radically polymerizable resin that is reactable with the first thermosetting resin.
(16) The present disclosure relates to a method of producing an antibacterial fiber-reinforced-resin composite molded article including: a base material layer formed from a shaping compound formed from fibers and a first thermosetting resin; and an antibacterial foam layer formed from thermosetting resin foam impregnated with a second thermosetting resin containing an antibacterial agent. The method of producing an antibacterial fiber-reinforced-resin composite molded article includes layering the shaping compound and the thermosetting resin foam impregnated with the second thermosetting resin containing the antibacterial agent, curing the first thermosetting resin and the second thermosetting resin by thermocompression molding in a state in which the shaping compound and the thermosetting resin foam impregnated with the second thermosetting resin containing the antibacterial agent are compressed, and integrally layering the base material layer and the antibacterial foam layer.
(17) The present disclosure also relates to the method of producing an antibacterial fiber-reinforced-resin composite molded article in above (16) in which the antibacterial agent is formed by causing glass to carry a silver ion.
(18) The present disclosure also relates to the method of producing an antibacterial fiber-reinforced-resin composite molded article in above (16) or (17) in which the shaping compound contains a curing agent, and the second thermosetting resin containing the antibacterial agent does not contain the curing agent.
(19) The present disclosure also relates to the method of producing an antibacterial fiber-reinforced-resin composite molded article in any one of above (16) to (18) in which the second thermosetting resin is a radically polymerizable resin that is reactable with the first thermosetting resin.
(20) The present disclosure relates to a fiber-reinforced-resin laminated molded article having: a surface layer portion formed from a fiber-reinforced-resin material for forming a surface layer portion; a base layer portion formed from a compound for forming a base layer portion that is formed from a thermosetting resin and shorter fibers than fibers contained in the fiber-reinforced-resin material for forming a surface layer portion; and an intermediate layer portion formed from a thermosetting resin foam sheet with a continuous bubble structure that is arranged between the fiber-reinforced-resin material for forming a surface layer portion and the compound for forming a base layer portion. The fiber-reinforced-resin material for forming a surface layer portion, the thermosetting resin foam sheet with the continuous bubble structure, and the compound for forming a base layer portion are cured by thermocompression and are integrally layered.
(21) The present disclosure also relates to the fiber-reinforced-resin laminated molded article in above (20) further including a reinforcing layer portion between the base layer portion and the intermediate layer portion, the reinforcing layer portion being formed from a fiber-reinforced-resin material for forming a reinforcing layer portion, in which the fiber-reinforced-resin material for forming a surface layer portion, the thermosetting resin foam sheet with the continuous bubble structure, the fiber-reinforced-resin material for forming a reinforcing layer portion, and the compound for forming a base layer portion are cured by thermocompression and are integrally layered.
(22) The present disclosure also relates to the fiber-reinforced-resin laminated molded article in above (21) further including a second intermediate layer portion between the reinforcing layer portion and the base layer portion, the second intermediate layer portion being formed from a second thermosetting resin foam sheet with a continuous bubble structure, in which the fiber-reinforced-resin material for forming a surface layer portion, the thermosetting resin foam sheet with the continuous bubble structure, the fiber-reinforced-resin material for forming a reinforcing layer portion, the second thermosetting resin foam sheet with the continuous bubble structure, and the compound for forming a base layer portion are cured by thermocompression and are integrally layered.
(23) The present disclosure also relates to the fiber-reinforced-resin laminated molded article in any one of above (20) to (22) in which the fiber-reinforced-resin material is pre-preg (pre-impregnated), and the compound for forming a base layer portion is a sheet molding compound.
(24) The present disclosure relates to a method of producing a fiber-reinforced-resin laminated molded article having: a surface layer portion formed from a fiber-reinforced-resin material for forming a surface layer portion; a base layer portion formed from a compound for forming a base layer portion that is formed from a thermosetting resin and shorter fibers than fibers contained in the fiber-reinforced-resin material for forming a surface layer portion; and an intermediate layer portion formed from a thermosetting resin foam sheet with a continuous bubble structure arranged between the fiber-reinforced-resin material for forming a surface layer portion and the compound for forming a base layer portion. The method of producing a fiber-reinforced-resin laminated molded article includes layering, heating, and compressing the fiber-reinforced-resin material for forming a surface layer portion and the compound for forming a base layer portion with the thermosetting foam sheet with a continuous bubble structure interposed therebetween so as to be cured in a compressed state, thereby integrally layering the surface layer portion, the intermediate layer portion, and the base layer portion.
(25) The present disclosure also relates to the method of producing a fiber-reinforced-resin laminated molded article in above (24) further including: in the layering, arranging a fiber-reinforced-resin material for forming a reinforcing layer portion between the thermosetting foam sheet with the continuous bubble structure and the compound for forming a base layer portion; and curing the fiber-reinforced-resin material for forming a surface layer portion, the thermosetting resin foam sheet with the continuous bubble structure, the fiber-reinforced-resin material for forming a reinforcing layer portion, and the compound for forming a base layer portion by thermocompression to effect integral layering and provide a reinforcing layer portion formed from the fiber-reinforced-resin material for forming a reinforcing layer portion between the intermediate layer portion and the base layer portion.
(26) The present disclosure also relates to the method of producing a fiber-reinforced-resin laminated molded article in above (25) further including: in the layering, arranging a second thermosetting resin foam sheet with a continuous bubble structure between the fiber-reinforced-resin material for forming a reinforcing layer portion and the compound for forming a base layer portion; and curing the fiber-reinforced-resin material for forming a surface layer portion, the thermosetting resin foam sheet with the continuous bubble structure, the fiber-reinforced-resin material for forming a reinforcing layer portion, the second thermosetting resin foam sheet with the continuous bubble structure, and the compound for forming a base layer portion by thermocompression to effect integral layering and provide a second intermediate layer portion formed from the second thermosetting resin foam sheet with the continuous bubble structure between the reinforcing layer portion and the base layer portion.
(27) The present disclosure also relates to the method of producing a fiber-reinforced-resin laminated molded article in any one of above (24) to (26) in which the fiber-reinforced-resin material is pre-preg (pre-impregnated), and the compound for forming a base layer portion is a sheet molding compound.

### Advantageous Effects of Invention

According to the present disclosure, the fiber-reinforced-resin composite molded article is formed by heating, compressing, and curing the fiber-reinforced-resin material for a rigid layer, the shaping-layer compound, and the liquid-state resin in the layered state with the liquid-state resin. Thus, during the thermocompression by the mold at the time of producing the fiber-reinforced-resin composite molded article, the liquid-state resin acts as a heat-insulating layer between the shaping-layer compound and the mold surface of the mold. In this way, curing reaction of the shaping-layer compound is delayed. As a result, a flow rate of the shaping-layer compound until completion of curing becomes large, and the shaping layer formed from the shaping-layer compound can be made thin. Furthermore, the liquid-state resin acts as a lubricant between the shaping-layer compound and the mold surface of the mold so as to improve fluidity of the shaping-layer compound. Also, in this way, the shaping layer can be made thin. As a result, it is possible to obtain the fiber-reinforced-resin composite molded article that has rigidity by the rigid layer, can be formed in a complex shape by the shaping layer, and is thin.

According to the present disclosure, the antibacterial composite molded article has the antibacterial resin on the at least one surface side of the base material that is formed by compressing and curing the sheet-like fiber-reinforced-resin material. Accordingly, the antibacterial agent is concentrated on the surface of the antibacterial composite molded article, and highly effective antibacterial performance can be obtained.

According to the present disclosure, at the time of producing the antibacterial composite molded article, the thermosetting resin containing the antibacterial agent adheres to the at least one surface of the sheet-like fiber-reinforced-resin material, and the sheet-like fiber-reinforced-resin material, to which the thermosetting resin containing the antibacterial agent adheres, is compressed and cured. In this way, the sheet-like fiber-reinforced-resin material and the thermosetting resin containing the antibacterial agent can be cured simultaneously, which can make production work highly efficient.

According to the present disclosure, the antibacterial fiber-reinforced-resin composite molded article has favorable external surface appearance by the antibacterial foam layer laminated on the base material layer, and has high antibacterial performance by the second thermosetting resin containing the antibacterial agent saturating the antibacterial foam layer.

According to the present disclosure, at the time of producing the antibacterial fiber-reinforced-resin composite molded article, the shaping compound, which is formed from the fibers and the first thermosetting resin, and the thermosetting resin foam, which is impregnated with the second thermosetting resin containing the antibacterial agent, are superimposed, and the base material layer and the antibacterial foam layer are laminated and formed integrally by the thermocompression molding. Thus, the production work can be highly efficient.

According to the present disclosure, the fiber-reinforced-resin material for forming a surface layer portion and the compound for forming a base layer portion are laminated with the thermosetting resin foam sheet with the continuous bubble structure being interposed therebetween, and are heated and compressed so as to cause the compound for forming a base layer portion to flow and be shaped. At this time, it is possible to mitigate an influence of the flow of the compound for forming a base layer portion on the fiber-reinforced-resin material for forming a surface layer portion by the thermosetting resin foam sheet with the continuous bubble structure that exists between the compound for forming a base layer portion and the fiber-reinforced-resin material for forming a surface layer portion. In this way, it is possible to prevent disturbance of the fibers by the fiber-reinforced-resin material for forming a surface layer portion and obtain favorable external appearance of the fiber-reinforced-resin laminated molded article.

The fiber-reinforced-resin material for forming a surface layer portion and the compound for forming a base layer portion are laminated, heated, and compressed with the thermosetting resin foam sheet with the continuous bubble structure being interposed therebetween. In this way, when the compound for forming a base layer portion flows and is shaped, a volatile that is generated from the compound for forming a base layer portion is absorbed and dispersed by the thermosetting resin foam sheet with the continuous bubble structure that exists between the compound for forming a base layer portion and the fiber-reinforced-resin material for forming a surface layer portion, or is released to the outside through the thermosetting resin foam sheet with the continuous bubble structure. As a result, generation of voids and the like can be prevented, and the surface layer portion of the fiber-reinforced-resin laminated molded article can have the favorable external appearance.

Furthermore, by providing the reinforcing layer portion, which is formed from the fiber-reinforced-resin material for forming a reinforcing layer portion, between the intermediate layer portion and the base layer portion, it is possible to further improve strength and rigidity of the fiber-reinforced-resin laminated molded article that has the surface layer portion with favorable external appearance.

Moreover, the second intermediate layer portion, which is formed from the second thermosetting resin foam sheet with the continuous bubble structure, is provided between the reinforcing layer portion and the base layer portion. In this way, it is possible to mitigate an influence of the flow of the compound for forming a base layer portion and the volatile by the two thermosetting resin foam sheets with the continuous bubble structure that are the thermosetting resin foam sheet with the continuous bubble structure forming the intermediate layer portion and the second thermosetting resin foam sheet with the continuous bubble structure forming the second intermediate layer portion. As a result, the fiber-reinforced-resin laminated molded article can have the surface layer portion with the further favorable external appearance, and can have the high strength and the high rigidity.

### BRIEF DESCRIPTION OF DRAWINGS

FIG. 1 is a cross-sectional view of a fiber-reinforced-resin composite molded article according to a first embodiment of the present disclosure.
FIG. 2 is a cross-sectional view of a mold in the first embodiment of the present disclosure.
FIG. 3 is a table illustrating a composition, a thickness after molding, and the like of a coating resin in each example and each comparative example in the first embodiment of the present disclosure.
FIG. 4 is a cross-sectional view of an antibacterial composite molded article according to a second embodiment of the present disclosure.
FIG. 5 is a table illustrating a configuration and antibacterial performance in each example in the second embodiment of the present disclosure.
FIG. 6 is a cross-sectional view of an antibacterial fiber-reinforced-resin composite molded article according to a third embodiment of the present disclosure.
FIG. 7 includes cross-sectional views illustrating thermocompression during production of the antibacterial fiber-reinforced-resin composite molded article according to the third embodiment of the present disclosure.
FIG. 8 is a table illustrating a configuration and antibacterial performance in each example and each comparative example in the third embodiment of the present disclosure.
FIG. 9 is a cross-sectional view illustrating a fiber-reinforced-resin laminated molded article in a first aspect of a fourth embodiment of the present disclosure.
FIG. 10 is a cross-sectional view of a shaping mold used in a method of producing in the first aspect of the fourth embodiment of the present disclosure.
FIG. 11 is a cross-sectional view at the time of lamination in the method of producing in the first aspect of the fourth embodiment of the present disclosure.
FIG. 12 is a cross-sectional view at the time of thermocompression in the method of producing in the first aspect of the fourth embodiment of the present disclosure.
FIG. 13 is a cross-sectional view illustrating a fiber-reinforced-resin laminated molded article in a second aspect of the fourth embodiment of the present disclosure.
FIG. 14 is a cross-sectional view at the time of lamination in a method of producing in the second aspect of the fourth embodiment of the present disclosure.
FIG. 15 is a cross-sectional view illustrating a fiber-reinforced-resin laminated molded article in a third aspect of the fourth embodiment of the present disclosure.
FIG. 16 is a cross-sectional view at the time of lamination in a method of producing in the third aspect of the fourth embodiment of the present disclosure.
FIG. 17 is a cross-sectional view of a shaping mold used in an example of the fourth embodiment of the present disclosure.
FIG. 18 is a table illustrating contents of a thermosetting resin foam sheet, physicality of a fiber-reinforced-resin laminated molded article, and a determination on external appearance thereof in each example and comparative example in the fourth embodiment.

### DESCRIPTION OF EMBODIMENTS

### [First Embodiment]

A description will hereinafter be made on a fiber-reinforced-resin composite molded article and a method of producing the same in a first embodiment of the present disclosure.

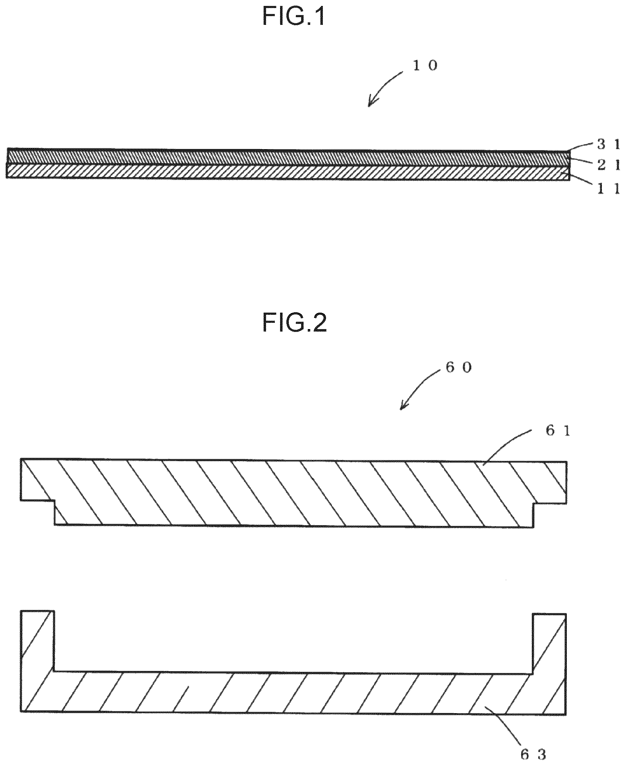

A fiber-reinforced-resin composite molded article 10 illustrated in FIG. 1 includes: a rigid layer 11 that is formed of a fiber-reinforced-resin material for rigidity; a shaping layer 21 that is formed of a shaping-layer compound; and a cured resin 31 in which a liquid-state resin adhering to a surface of the shaping-layer compound is cured.

The rigid layer 11 is formed by heating, compressing, and curing the fiber-reinforced-resin material for a rigid layer.

The fiber-reinforced-resin material for a rigid layer formed by impregnating a fiber sheet with thermosetting resin. The fiber sheet can be formed of fibers such as carbon fibers, glass fibers, or aramid fibers. In particular, the carbon fibers are preferred in terms of weight reduction and improved rigidity. The fiber sheet may be woven fabric, knitted fabric, nonwoven fabric, or the like. The woven fabric includes plain woven fabric, twill woven fabric, sateen woven fabric, triaxial woven fabric, and the like. The fiber sheet may include the fibers that are oriented in one direction or plural directions. The fiber sheet is preferably a fiber woven fabric in terms of the improved rigidity.

Each of the fibers constituting the fiber sheet is preferably longer in fiber length than the fiber included in the shaping-layer compound, which will be described below, and examples of such fibers are continuous fibers or discontinuous fibers.

Examples of the thermosetting resin with which the fiber sheet is impregnated are an epoxy resin, a phenol resin, a vinyl ester resin, an unsaturated polyester resin, and a mixed resin of these. The fiber-reinforced-resin material for a rigid layer in which the fiber sheet is impregnated with the thermosetting resin is preferably pre-preg (pre-impregnated).

The shaping layer 21 is formed by heating, compressing, and curing a shaping-layer compound that includes the thermosetting resin and shorter fibers than those included in the fiber-reinforced-resin material for a rigid layer. A surface shape of the shaping layer 21 may be an appropriate concave, convex, or uneven shape according to an application of the fiber-reinforced-resin composite molded article 10, and the like.

A length of the fiber included in the shaping-layer compound is preferably 30 mm or shorter in terms of moldability, and is preferably 5 mm or longer in terms of the improved rigidity. Examples of the fibers included in the shaping-layer compound are short fibers such as the carbon fibers or the glass fibers. In particular, the carbon fibers are preferred in terms of the weight reduction and the improved rigidity.

Examples of the thermosetting resin contained in the shaping-layer compound are the epoxy resin, the phenol resin, the vinyl ester resin, the unsaturated polyester resin, and the mixed resin of these.

A sheet molding compound (hereinafter referred to as SMC) is preferred as the shaping-layer compound. The SMC is a sheet-like molding material that is formed by impregnating a fiber material such as the glass fiber or the carbon fiber with a compound containing a filler, a curing agent, and the like in the thermosetting resin.

The cured resin 31 is formed by curing the liquid-state resin. The liquid-state resin is formed from the thermosetting resin. Together with the shaping-layer compound, the liquid-state resin is heated and compressed at the time of producing the fiber-reinforced-resin composite molded article 10. In this way, the liquid-state resin is mixed with the curing agent in the thermosetting resin contained in the shaping-layer compound. Thus, the liquid-state resin can be cured without containing the curing agent.

As the thermosetting resin that forms the liquid-state resin, a thermosetting resin of a radical polymerization type, such as the vinyl ester resin, the unsaturated polyester resin, or the epoxy resin, is preferred. The curing agent, a dispersant, a flame retardant, a UV absorber, or the like may be added to the thermosetting resin when necessary. In addition, the liquid-state resin may be blended with a solvent along with the thermosetting resin so as to have coatable viscosity.

Due to thermocompression at the time of producing the fiber-reinforced-resin composite molded article 10, the fiber-reinforced-resin material for a rigid layer, the shaping-layer compound, and the liquid-state resin on the surface thereof are cured in a layered state. As a result, the rigid layer 11, the shaping layer 21, and the cured resin 31 are formed integrally.

A description will be made on a method of producing the fiber-reinforced-resin composite molded article 10. A method of producing the fiber-reinforced-resin composite molded article 10 includes a coating step and a thermocompression step.

In the coating step, the uncured liquid-state resin is applied to one side surface of the shaping-layer compound or a mold surface of a mold. A mold 60 illustrated in FIG. 2 includes an upper mold 61 and a lower mold 63. When the uncured liquid-state resin is applied to a mold surface of the mold 60, the liquid-state resin is applied to the mold surface that presses the shaping-layer compound at the time of tightening the mold in the next thermocompression step, for example, a mold surface of the upper mold 61. Here, for the application of the liquid-state resin to the one side surface of the shaping-layer compound, the fiber-reinforced-resin material for a rigid layer and the shaping-layer compound may be laminated and arranged in the lower mold 63 of the mold 60, and the liquid-state resin may be applied to the surface of the shaping-layer compound. Any application method such as brushing, roller application, or spray application can be used. An area where the liquid-state resin is applied is not limited to the entire surface of the shaping-layer compound but may be a part thereof.

The shaping-layer compound is as described in the fiber-reinforced-resin composite molded article 10. The shaping-layer compound used herein preferably is in size in which a planar dimension is 30% to 100% of a product (the fiber-reinforced-resin composite molded article 10).

The liquid-state resin is as described in the fiber-reinforced-resin composite molded article 10. An application amount of the liquid-state resin is preferably 20 g/m² to 200 g/m² for the surface of the shaping-layer compound.

In the thermocompression step, the fiber-reinforced-resin material for a rigid layer, the shaping-layer compound, and the liquid-state resin are arranged in the layered state between the mold surface of the upper mold 61 and the mold surface of the lower mold 63 in the mold 60 and, in such a state, heated and compressed by the mold surface of the upper mold 61 and the mold surface of the lower mold 63. The lower mold 63 is formed with a shaping cavity for the fiber-reinforced-resin composite molded article 10. Planar size of the shaping cavity is set to be equal to the planar size of the fiber-reinforced-resin composite molded article 10.

Due to the thermocompression, the fiber-reinforced-resin material for a rigid layer and the shaping-layer compound are compressed and flow in the mold 60. Then, the fiber-reinforced-resin material for a rigid layer and the shaping-layer compound are shaped into a cavity shape and cured. Since the liquid-state resin exists between the shaping-layer compound and the mold surface at the time, the liquid-state resin acts as a lubricant on the surface of the shaping-layer compound, which improves fluidity of the shaping-layer compound in the mold 60 and shapes the shaping-layer compound to be thin. In addition, the liquid-state resin acts as a heat-insulating layer between the shaping-layer compound and the mold surface, delays curing reaction of the shaping-layer compound by heat transfer from the mold surface, and increases a flow rate of the shaping-layer compound until completion of curing. Also, in this way, the shaping-layer compound is shaped to be thin.

During the thermocompression, the liquid-state resin on the surface of the shaping-layer compound is pressed by the mold surface, is mixed with the thermosetting resin on and near the surface of the shaping-layer compound, and is cured. At the time, even in the case where the liquid-state resin does not contain the curing agent, the liquid-state resin can be cured by being mixed with the curing agent contained in the shaping-layer compound.

Heating in the thermocompression step is performed by heating means such as an electric heater provided to the mold or by a method of accommodating and heating the mold in a furnace or the like in advance. A heating temperature is set at a temperature at which the thermosetting resin and the liquid-state resin contained in the fiber-reinforced-resin material for a rigid layer and the shaping-layer compound are cured.

Due to the thermocompression step, the rigid layer formed by compressing and curing the fiber-reinforced-resin material for a rigid layer, the shaping layer formed by compressing and curing the shaping-layer compound in a thin-shaped state, and the resin formed by curing the liquid-state resin on the surface thereof are integrated. As a result, the thin fiber-reinforced-resin composite molded article 10 including the rigid layer 11, the shaping layer 21, and the cured resin 31 on the surface thereof illustrated in FIG. 1 is obtained.

### [Examples of First Embodiment]

Carbon fiber fabric (manufactured by TEIJIN LIMITED, product name: W-3161L, thickness of 0.22 mm) that was cut into 400 mm × 400 mm was soaked in a phenolic resin solution (manufactured by Sumitomo Bakelite Co., Ltd., product name: PR-55791B, resin concentration: 60 wt% ethanol solution). After being taken out, the carbon fiber fabric was dried naturally at a room temperature of 25 °C for 2 hours and then dried under an atmosphere at 60 °C for 1 hour to form the fiber-reinforced-resin material for a rigid layer (the pre-preg).

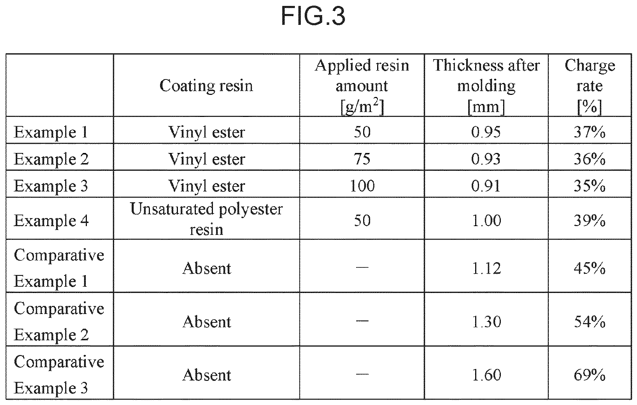

A piece of the fiber-reinforced-resin material for a rigid layer (the pre-preg) was placed on the molding surface of the lower mold of the mold, and the shaping-layer compound (SMC, manufactured by Mitsubishi Chemical Corporation, product name: STR120N131, thickness of 2 mm, fiber content of 53%), which was cut to a size of 300 mm × 300 mm, was laminated thereon. Then, the uncured coating resin (the thermosetting resin) in a liquid form illustrated in each Example in FIG. 3 was applied to the surface of the shaping-layer compound with a brush. Thereafter, the mold was closed, and heated and compressed at 150 °C for 20 minutes at a pressure of 200 kgf/cm² to cure the fiber-reinforced-resin material for a rigid layer (the pre-preg), the shaping-layer compound, and the coating resin in a laminated and compressed state. In this way, the fiber-reinforced-resin composite molded article, which is formed from a laminated integrated product including the rigid layer formed from the fiber-reinforced-resin material for a rigid layer (the pre-preg), the shaping layer formed from the shaping-layer compound, and the cured resin formed from the coating resin, was produced. The mold includes the lower mold and the upper mold, and has a molding surface of 460 mm in width × 460 mm in length.

In addition, the fiber-reinforced-resin composite molded articles in Comparative Example 1 to Example 3 were produced by thermocompression molding without applying the thermosetting resin to the surface of the shaping-layer compound.

A thickness of the fiber-reinforced-resin composite molded article after molding in each Example and each Comparative Example was measured. The result is shown in FIG. 3. Here, a charge rate [%] in FIG. 3 is a ratio of the thickness of the shaping layer to the original thickness (2 mm) of the shaping-layer compound. In the calculation of the charge rate, it was assumed that the thickness (0.22 mm) of the fiber-reinforced-resin material for a rigid layer (the pre-preg) did not change by the thermocompression, and, as the thickness of the shaping layer, a value obtained by subtracting the thickness (0.22 mm) of the fiber-reinforced-resin material for a rigid layer (the pre-preg) from the thickness after molding (a thickness of the fiber-reinforced-resin composite molded article) was used.

Example 1 is an example in which 50 g/m² of the vinyl ester resin (manufactured by Showa Denko K.K., product name: Lipoxy R-806) was applied, as the coating resin (the thermosetting resin), to the surface of the shaping-layer compound. In Example 1, the thickness of the fiber-reinforced-resin composite molded article after molding was 0.95 mm, and the charge rate was 37%. The thickness of the shaping layer formed from the shaping-layer compound (thickness of 2 mm) was the thickness of the fiber-reinforced-resin composite molded article (0.95 mm) - the thickness of the fiber-reinforced-resin material for a rigid layer (0.22 mm) = 0.73 mm, and the shaping layer was formed to be thin.

Example 2 is an example in which 75 g/m² of the vinyl ester resin (manufactured by Showa Denko K.K., product name: Lipoxy R-806), which was the same as that in Example 1, was applied, as the coating resin (the thermosetting resin), to the surface of the shaping-layer compound. In Example 2, the thickness of the fiber-reinforced-resin composite molded article after molding was 0.93 mm, and the charge rate was 36%. The thickness of the shaping layer formed from the shaping-layer compound (thickness of 2 mm) was the thickness of the fiber-reinforced-resin composite molded article (0.93 mm) - the thickness of the fiber-reinforced-resin material for a rigid layer (0.22 mm) = 0.71 mm. By increasing the application amount of the coating resin in comparison with Example 1, the shaping layer was formed to be thinner than that in Example 1.

Example 3 is an example in which 100 g/m² of the vinyl ester resin (manufactured by Showa Denko K.K., product name: Lipoxy R-806), which was the same as those in Example 1 and Example 2, was applied, as the coating resin (the thermosetting resin), to the surface of the shaping-layer compound. In Example 3, the thickness of the fiber-reinforced-resin composite molded article after molding was 0.91 mm, and the charge rate was 35%. The thickness of the shaping layer formed from the shaping-layer compound (thickness of 2 mm) was the thickness of the fiber-reinforced-resin composite molded article (0.91 mm) - the thickness of the fiber-reinforced-resin material for a rigid layer (0.22 mm) = 0.69 mm. By increasing the application amount of the coating resin in comparison with Example 1 and Example 2, the shaping layer was formed to be further thinner than those in Example 1 and Example 2.

Example 4 is an example in which 50 g/m² of the unsaturated polyester resin (manufactured by Showa Denko K.K., product name: RIGOLAC T-543TPA) was applied, as the coating resin (the thermosetting resin), to the surface of the shaping-layer compound. In Example 4, the thickness of the fiber-reinforced-resin composite molded article after molding was 1.00 mm, and the charge rate was 39%. The thickness of the shaping layer formed from the shaping-layer compound (thickness of 2 mm) was the thickness of the fiber-reinforced-resin composite molded article (1.00 mm) - the thickness of the fiber-reinforced-resin material for a rigid layer (0.22 mm) = 0.78 mm, and the shaping layer was formed to be thin.

As described above, in Example 1 to Example 4, the thermosetting resin in the liquid form was applied to the surface of the shaping-layer compound, which was laminated to the fiber-reinforced-resin material for a rigid layer (the pre-preg), and the thermocompression molding was performed. As a result, the shaping layer, which was formed from the shaping-layer compound, could be shaped thinly with the thickness of 0.69 mm to 0.78 mm, and the thin fiber-reinforced-resin composite molded article with the thickness of 1 mm or less could be obtained.

Comparative Example 1 is an example in which the thermosetting resin in the liquid form was not applied to the surface of the shaping-layer compound, and thermocompression conditions are the same as those in Examples 1 to 4. In Comparative Example 1, the thickness of the fiber-reinforced-resin composite molded article after molding was 1.12 mm, and the charge rate was 45%. The thickness of the shaping layer formed from the shaping-layer compound (thickness of 2 mm) was the thickness of the fiber-reinforced-resin composite molded article (1.12 mm) - the thickness of the fiber-reinforced-resin material for a rigid layer (0.22 mm) = 0.90 mm. By not applying the thermosetting resin in the liquid form to the surface of the shaping-layer compound, the shaping layer was formed to be thicker than those in Example 1 to Example 4.

Comparative Example 2 is an example in which an area of the shaping-layer compound in Comparative Example 1 was increased by 10% and the thermosetting resin in the liquid form was not applied. In Comparative Example 2, the thickness of the fiber-reinforced-resin composite molded article after molding was 1.30 mm, and the charge rate was 54%. The thickness of the shaping layer formed from the shaping-layer compound (thickness of 2 mm) was the thickness of the fiber-reinforced-resin composite molded article (1.30 mm) - the thickness of the fiber-reinforced-resin material for a rigid layer (0.22 mm) = 1.08 mm. By increasing an amount of the shaping-layer compound, the shaping layer was formed to be thicker than that in Comparative Example 1.

Comparative Example 3 is an example in which the area of the shaping-layer compound in Comparative Example 1 was increased by 20% and the thermosetting resin in the liquid form was not applied. In Comparative Example 3, the thickness of the fiber-reinforced-resin composite molded article after molding was 1.60 mm, and the charge rate was 69%. The thickness of the shaping layer formed from the shaping-layer compound (thickness of 2 mm) was the thickness of the fiber-reinforced-resin composite molded article (1.60 mm) - the thickness of the fiber-reinforced-resin material for a rigid layer (0.22 mm) = 1.38 mm. By increasing the amount of the shaping-layer compound, the shaping layer was formed to be thicker than those in Comparative Example 1 and Comparative Example 2.

As described above, according to the present disclosure, it is possible to obtain the fiber-reinforced-resin composite molded article capable of being formed in the thin complex shape by the shaping layer while having the rigidity by the rigid layer.

### [Second Embodiment]

A description will hereinafter be made on an antibacterial composite molded article and a method of producing the same in a second embodiment of the present disclosure.

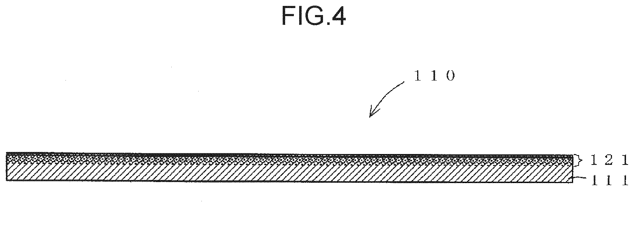

An antibacterial composite molded article 110 illustrated in FIG. 4 includes a base material 111 and an antibacterial resin 121 formed on one surface side thereof.

The base material 111 is formed by compressing and curing the sheet-like fiber-reinforced-resin material. A thickness of the base material 111 varies by application of the antibacterial composite molded article 110, and an example of the thickness is 0.7 mm to 5.0 mm.

The sheet-like fiber-reinforced-resin material is of a sheet type in which the fiber material, such as the glass fiber or the carbon fiber, is impregnated with the thermosetting resin, and is preferably the sheet molding compound (hereinafter referred to as the SMC). The SMC is the sheet-like molding material that is formed by impregnating the fiber material such as the glass fiber or the carbon fiber with a compound containing the filler, the curing agent, and the like in the thermosetting resin such as the unsaturated polyester resin.

The antibacterial resin 121 is formed such that the thermosetting resin containing the antibacterial agent adheres to at least one surface of the sheet-like fiber-reinforced-resin material, is compressed with the sheet-like fiber-reinforced-resin material, and is cured. The antibacterial resin 121 is formed on the surface of the base material 111 and near the surface impregnated therein. The antibacterial resin 121 may be provided on both of the surfaces of the base material 111.

The thermosetting resin containing the antibacterial agent is the thermosetting resin that contains the antibacterial agent, and is obtained by blending a specified amount of the antibacterial agent into the thermosetting resin and mixing the antibacterial agent and the thermosetting resin by a mixer.

As the antibacterial agents, inorganic antibacterial agents and organic antibacterial agents are available. However, since the inorganic antibacterial agents are generally safer than the organic antibacterial agents and generally have superior durability and heat resistivity to the organic antibacterial agents, the inorganic antibacterial agents are preferred. The inorganic antibacterial agent is produced by causing an inorganic carrier to carry antibacterial metal ions. Examples of the inorganic carrier are zeolite, a clay mineral, glass, silica gel, alumina, zirconium phosphate, and calcium phosphate. Examples of the antibacterial metal ion are a silver ion, a copper ion, and a zinc ion.

As the thermosetting resin that contains the antibacterial agent, the thermosetting resin of the radical polymerization type, such as the vinyl ester resin, the unsaturated polyester resin, or the epoxy resin, is preferred.

Concentration of the antibacterial agent is preferably 0.1 wt% to 5.0 wt%. In the case where the concentration of the antibacterial agent is excessively low, an antibacterial effect is degraded. On the contrary, in the case where the concentration of the antibacterial agent is excessively high, the cost is increased.

In addition, an amount of the antibacterial agent on the surface of the antibacterial composite molded article 110 is preferably 0.1 g/m² to 8.0 g/m² of the surface of the antibacterial composite molded article 110. In the case where the amount of the antibacterial agent on a surface area of the antibacterial composite molded article 110 is excessively small, the antibacterial effect is degraded. On the contrary, in the case where the amount of the antibacterial agent is excessively large, the cost is increased.

The curing agent, the dispersant, the flame retardant, the UV absorber, or the like may be added to the thermosetting resin containing the antibacterial agent when necessary.

The thermosetting resin containing the antibacterial agent in this embodiment adheres to the at least one surface of the sheet-like fiber-reinforced-resin material and mixes with the curing agent in the thermosetting resin of the sheet-like fiber-reinforced-resin material when compressed together with the sheet-like fiber-reinforced-resin material. Accordingly, even without containing the curing agent, the thermosetting resin containing the antibacterial agent can be cured by the curing agent that is contained in the thermosetting resin of the sheet-like fiber-reinforced-resin material. In such a case, the thermosetting resin that is used as the thermosetting resin containing the antibacterial agent is a resin that is cured by the curing agent contained in the thermosetting resin of the sheet-like fiber-reinforced-resin material. Because of not containing the curing agent, the thermosetting resin containing the antibacterial agent eliminates a problem of a pot life in which the curing reaction progresses before use, and can exert stable performance.

In the case where the thermosetting resin containing the antibacterial agent does not contain the curing agent, the antibacterial composite molded article includes: the base material that is formed by compressing and curing the sheet-like fiber-reinforced-resin material; and the antibacterial resin provided on at least one surface side of the base material. The antibacterial resin is formed by heating, compressing, and curing the thermosetting resin containing the antibacterial agent, which does not contain the curing agent, integrally with the sheet-like fiber-reinforced-resin material.

A description will be made on a method of producing the antibacterial composite molded article 110. The method of producing the antibacterial composite molded article 110 includes an adhesion step and a heating, compressing, and curing step.

In the adhesion step, the thermosetting resin containing the antibacterial agent adheres to the at least one surface side of the sheet-like fiber-reinforced-resin material.

As an adhesion method of the thermosetting resin containing the antibacterial agent, a first adhesion method and a second adhesion method are available.

In the first adhesion method, the thermosetting resin containing the antibacterial agent is applied to the at least one surface side of the sheet-like fiber-reinforced-resin material.

In the second adhesion method, the thermosetting resin containing the antibacterial agent is applied to at least one mold surface of the mold, the sheet-like fiber-reinforced-resin material is set in the mold, and then the thermosetting resin containing the antibacterial agent, which is applied to the mold surface, is brought into contact and adheres to the at least one surface side of the sheet-like fiber-reinforced-resin material. The mold includes the lower mold and the upper mold. For example, thermosetting resin containing the antibacterial agent is applied to the mold surface of the lower mold.

The sheet-like fiber-reinforced-resin material is as described in the antibacterial composite molded article 110. The sheet-like fiber-reinforced resin material used herein preferably is in size in which a planar dimension is 30 % to 100% of a product (the antibacterial composite molded article 110) and a thickness dimension is 100 % to 300% thereof.

The thermosetting resin containing the antibacterial agent, which adheres to the at least one surface of the sheet-like fiber-reinforced-resin material, is as described in the antibacterial composite molded article 110, and is used in the uncured liquid form. The concentration of the antibacterial agent in the thermosetting resin containing the antibacterial agent is preferably 0.1 wt% to 5.0 wt%. In addition, an adhesion amount of the thermosetting resin containing the antibacterial agent to the at least one surface of the sheet-like fiber-reinforced-resin material is preferably set such that the amount of the antibacterial agent is 0.1 g/ m² to 8.0 g/ m² of the surface of the antibacterial composite molded article 110.

The thermosetting resin containing the antibacterial agent can be applied by brushing, the roller application, the spray application, or the like.

In the heating, compressing, and curing step, the sheet-like fiber-reinforced-resin material, to which the thermosetting resin containing the antibacterial agent has adhered, is heated, compressed, and cured in the mold.

In the case where the first adhesion method is adopted for the adhesion step, the sheet-like fiber-reinforced-resin material, to which the thermosetting resin containing the antibacterial agent has been applied (has adhered), is set in the mold and is then heated and compressed.

The mold includes the lower mold and the upper mold, and the lower mold is formed with the cavity in which the sheet-like fiber-reinforced-resin material, to which the thermosetting resin containing the antibacterial agent has been applied, is placed. The cavity is in size that is equal to the antibacterial composite molded article 110.

In the case where the thermosetting resin containing the antibacterial agent is applied to only one surface of the sheet-like fiber-reinforced-resin material and the sheet-like fiber-reinforced-resin material, to which the thermosetting resin containing the antibacterial agent has been applied, is set in the mold, a direction of the surface to which the thermosetting resin containing the antibacterial agent is applied may be either upward or downward.

In the case where the second adhesion method is adopted for the adhesion step, the sheet-like fiber-reinforced-resin material is set in the mold in the adhesion step. Accordingly, by using the mold used in the adhesion step, the sheet-like fiber-reinforced-resin material, to which the thermosetting resin containing the antibacterial agent has adhered, is heated and compressed.

The thermosetting resin containing the antibacterial agent is pressed onto the surface of the sheet-like fiber-reinforced-resin material by a pressure of the mold, is mixed with the thermosetting resin on and near the surface of the sheet-like fiber-reinforced-resin material, and is then cured. At the time, even without containing the curing agent, the thermosetting resin containing the antibacterial agent is mixed with the curing agent contained in the thermosetting resin of the sheet-like fiber-reinforced-resin material, and is thereby cured.

Heating in the heating, compressing, and curing step is performed by the heating means such as the electric heater provided to the mold or by the method of accommodating and heating the mold in the furnace or the like in advance. The heating temperature is set at a temperature at which the thermosetting resin in the sheet-like fiber-reinforced-resin material and the thermosetting resin in the thermosetting resin containing the antibacterial agent are cured.

Due to the heating, compressing, and curing step, the base material, which is formed by compressing and curing the sheet-like fiber-reinforced-resin material, is formed, and, at least one surface side thereof, the antibacterial resin, which is formed by curing the thermosetting resin containing the antibacterial agent, is formed. In this way, the antibacterial composite molded article 110 including the base material 111 and the antibacterial resin 121 on the surface thereof, which are illustrated in FIG. 4, is obtained.

In the case where the thermosetting resin containing the antibacterial agent does not contain the curing agent, the method of producing the antibacterial composite molded article is the method of producing the antibacterial composite molded article that includes: the base material formed by compressing and curing the sheet-like fiber-reinforced-resin material; and the antibacterial resin provided on the at least one surface side of the base material, and includes: the adhesion step of causing the thermosetting resin containing the antibacterial agent, which does not contain the curing agent, to adhere to the at least one surface side of the sheet-like fiber-reinforced-resin material; and the heating, compressing, and curing step of heating, compressing, and curing the sheet-like fiber-reinforced-resin material to which the thermosetting resin containing the antibacterial agent has adhered. In this way, the antibacterial resin, which is formed by curing the thermosetting resin containing the antibacterial agent, is provided on the at least one surface side of the base material, which is formed by compressing and curing the sheet-like fiber-reinforced-resin material.

### [Examples of Second Embodiment]

### • Example 11

### <Preparation of Thermosetting Resin Containing Antibacterial Agent>

A silver-based antibacterial agent (manufactured by Sinanen Zeomic Co., Ltd., product name: IM10D-L) of 20 g was added to the vinyl ester resin (manufactured by Showa Denko K.K., product name: Lipoxy R-806) of 980 g, and the mixture was stirred for 5 minutes at a rotation speed of 1000 rpm using a stirrer (manufactured by AS ONE CORPORATION, product name: High-Speed Stirrer ST-200) to prepare the thermosetting resin containing the antibacterial agent (not containing the curing agent) with the concentration 2.0 wt% of the antibacterial agent.

### <Adhesion Step>

An SMC material (manufactured by Mitsubishi Chemical Corporation, product name: STR120N131), which had the thickness of 2.0 mm and in which the reinforced fiber sheet having short carbon fibers dispersed in a random fiber direction was impregnated with a vinyl ester resin composition (containing the curing agent), was cut to a size of 150 mm × 200 mm (weight: 90 g). Then, 12 g of the thermosetting resin containing the antibacterial agent was placed on one side surface thereof and was applied evenly using a brush. Weight of the SMC material after the application was 102 g.

### <Heating, Compressing, and Curing Step>

The SMC material after the application of the thermosetting resin containing the antibacterial agent was placed in a central portion of a lower mold cavity (200 mm × 300 mm) of the mold that was heated to 130 °C in advance. A thickness of the cavity was set to 1 mm by spacers placed at four corners between the lower mold and the upper mold, the upper mold was placed to close the mold, and the pressure of 10 MPa was applied for 10 minutes for heating and pressurization. Thereafter, the mold was opened to take out the antibacterial composite molded article in Example 1. The size of the antibacterial composite molded article in Example 1 was 200 mm × 300 mm × 1 mm in thickness.

The antibacterial composite molded article in Example 11 was determined for external appearance thereof and measured for antibacterial performance thereof.

For the determination of the external appearance, presence or absence of stickiness on the surface of the antibacterial composite molded article and presence or absence of a defect such as a wrinkle on the surface due to poor elongation during pressurization were observed. In the case where none of the above was present, "Double-circle" was set. In the case where any one of the above was present, "×" was set.

To test the antibacterial performance, a total of five test pieces for antibacterial activity in size of 50 mm × 50 mm were cut from the four corners and a center of the antibacterial composite molded article. Then, these test pieces for antibacterial activity were used to measure against Escherichia coli and Staphylococcus aureus according to five test methods in JIS Z 2801:2012 "Antibacterial products-Test for antibacterial activity and efficacy". For evaluation of the antibacterial performance, it was determined that the antibacterial effect was present in the case where an antibacterial activity value was 2.0 or higher.

### • Example 12

The amount of the antibacterial agent to be added to 998 g of the vinyl ester resin (manufactured by Showa Denko K.K., product name: Lipoxy R-806) was set to 2 g, and the thermosetting resin containing the antibacterial agent (without containing the curing agent) with the antibacterial agent concentration of 0.2 wt% was prepared. Except for the above, the antibacterial composite molded article in Example 12 was prepared in the same manner as that in Example 11.

Similar to Example 11, the antibacterial composite molded article in Example 12 was determined for the external appearance thereof and measured for the antibacterial performance thereof.

### • Example 13

The silver-based antibacterial agent (manufactured by Sinanen Zeomic Co., Ltd., product name: IM10D-L) of 20 g was added to the unsaturated polyester resin (manufactured by Showa Denko K.K., product name: RIGOLAC T-543TPA) of 980 g. Then, the mixture was stirred in the same manner as that in Example 11 to prepare the thermosetting resin containing the antibacterial agent (without containing the curing agent) with the antibacterial agent concentration of 2.0 wt%. Except for the above, the antibacterial composite molded article in Example 13 was prepared in the same manner as that in Example 11.

Similar to Example 11, the antibacterial composite molded article in Example 13 was determined for the external appearance thereof and measured for the antibacterial performance thereof.

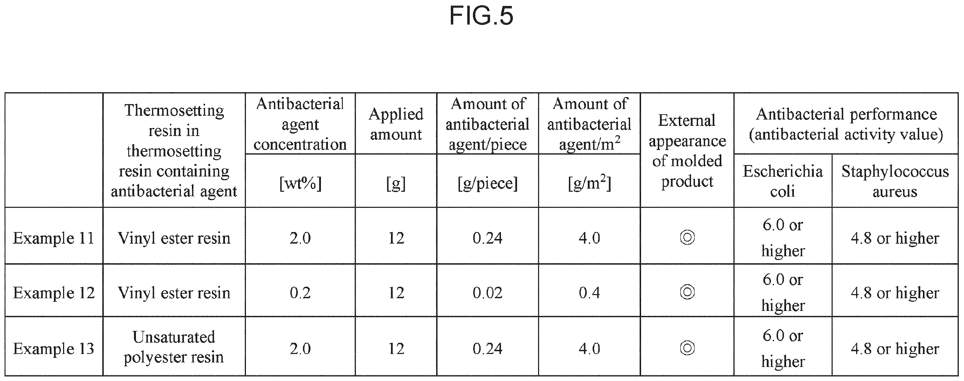

FIG. 5 illustrates the configurations and results of the external appearance of the molded products and the antibacterial performance in Examples.

Example 11 is an example in which 12 g of the thermosetting resin containing the antibacterial agent, in which the silver-based antibacterial agent is mixed with the vinyl ester resin at the concentration of 2.0 wt, is applied to the one side surface of the SMC material. The amount of the antibacterial agent applied to the surface of the SMC material is 0.24 gram per one piece of the SMC material and 4.0 grams per 1 m² of surface area of the SMC material.

The external appearance of the molded product in Example 11 was free of the stickiness and the molding defect, and the external appearance of the molded product was evaluated as "Double-circle". In regard to the antibacterial performance, the antibacterial activity values were 6.0 or higher for Escherichia coli and 4.8 or higher for Staphylococcus aureus, both of which significantly exceeded 2.0 as a determination criterion for the antibacterial effect. Thus, the molded product had the high antibacterial property.

Example 12 is an example in which 12 g of the thermosetting resin containing the antibacterial agent, in which the silver-based antibacterial agent is mixed with the vinyl ester resin at the concentration of 0.2 wt, is applied to the one side surface of the SMC material. The amount of the antibacterial agent applied to the surface of the SMC material is 0.02 gram per one piece of the SMC material and 0.4 gram per 1 m² of surface area of the SMC material.

The external appearance of the molded product in Example 12 was free of the stickiness and the molding defect, and the external appearance of the molded product was evaluated as "Double-circle". In regard to the antibacterial performance, the antibacterial activity values were 6.0 or higher for Escherichia coli and 4.8 or higher for Staphylococcus aureus, both of which significantly exceeded 2.0 as the determination criterion for the antibacterial effect. Thus, the molded product had the high antibacterial property.

Example 13 is an example in which 12 g of the thermosetting resin containing the antibacterial agent, in which the silver-based antibacterial agent is mixed with the unsaturated polyester resin at the concentration of 2.0 wt, is applied to the one side surface of the SMC material. The amount of the antibacterial agent applied to the surface of the SMC material is 0.24 gram per one piece of the SMC material and 4.0 grams per 1 m² of surface area of the SMC material.

The external appearance of the molded product in Example 13 was free of the stickiness and the molding defect, and the external appearance of the molded product was evaluated as "Double-circle". In regard to the antibacterial performance, the antibacterial activity values were 6.0 or higher for Escherichia coli and 4.8 or higher for Staphylococcus aureus, both of which significantly exceeded 2.0 as the determination criterion for the antibacterial effect. Thus, the molded product had the high antibacterial property.

In order to confirm the effects by the thermosetting resin containing the antibacterial agent, the vinyl ester resin not containing the antibacterial agent was used instead of the thermosetting resin containing the antibacterial agent in Example 11, and the composite molded article in Comparative Example was prepared in the same manner as in Example 11, and the antibacterial performance was measured. As a result, the antibacterial activity value was less than 2.0 for both of Escherichia coli and Staphylococcus aureus, and no antibacterial effect was obtained.

As described above, the antibacterial composite molded article in the present disclosure has the favorable antibacterial performance, and, in the method of producing the antibacterial composite molded article, it is possible to efficiently produce the antibacterial composite molded article having the favorable antibacterial property.

### [Third Embodiment]

A description will hereinafter be made on an antibacterial fiber-reinforced-resin composite molded article and a method of producing the same in a third embodiment of the present disclosure.

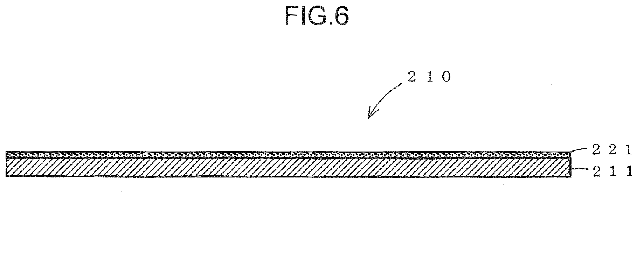

An antibacterial fiber-reinforced-resin composite molded article 210 illustrated in FIG. 6 includes a base material layer 211 and an antibacterial foam layer 221 formed on one side thereof. The base material layer 211 and the antibacterial foam layer 221 are laminated and integrally formed by the thermocompression molding. A surface shape of the antibacterial fiber-reinforced-resin composite molded article 210 in this embodiment is a shape that corresponds to an application of the antibacterial fiber-reinforced-resin composite molded article 210, and can be a complex uneven shape.

The base material layer 211 is formed, by the thermocompression molding, from a shaping compound containing fibers and a first thermosetting resin. A thickness of the base material layer 211 varies by the application of the antibacterial fiber-reinforced-resin composite molded article 210, and an example of the thickness is approximately 0.7 mm to 5.0 mm.

Examples of the fiber are the short fibers of the glass fiber and the carbon fiber.

The first thermosetting resin is preferably a radically polymerizable resin such as the unsaturated polyester resin, the vinyl ester resin, a urethane (meth)acrylate resin, a polyester (meth)acrylate resin, or a polyether (meth)acrylate resin.

The sheet molding compound (hereinafter referred to as the SMC) is preferred as the shaping compound. The SMC is the sheet-like molding material that is formed by impregnating the fiber material such as the glass fiber or the carbon fiber with a compound containing the filler, the curing agent, and the like in the first thermosetting resin. A thickness of the SMC before thermocompression is preferably 1.0 mm to 3.0 mm.

Examples of the curing agent contained in the shaping compound are methyl ethyl ketone peroxide, dicumylperoxide, benzoyl peroxide, and t-butyl peroxy benzoyate.

The antibacterial foam layer 221 is formed, by the thermocompression molding, from thermosetting resin foam impregnated with a second thermosetting resin containing the antibacterial agent. A thickness of the antibacterial foam layer 221 is appropriately determined, an example thereof is approximately 0.3 mm to 3 mm.

The second thermosetting resin containing the antibacterial agent is a mixture of the antibacterial agent at a specified concentration in the second thermosetting resin.

As the antibacterial agents, the inorganic antibacterial agents and the organic antibacterial agents are available. However, since the inorganic antibacterial agents are generally safer than the organic antibacterial agents and generally have the superior durability and heat resistivity to the organic antibacterial agents, the inorganic antibacterial agents are preferred. The inorganic antibacterial agent is produced by causing the inorganic carrier to carry the antibacterial metal ions. Examples of the inorganic carrier are zeolite, a clay mineral, glass, silica gel, alumina, zirconium phosphate, and calcium phosphate. Examples of the antibacterial metal ion are the silver ion, the copper ion, and the zinc ion. In particular, the antibacterial agent in which the glass carries the silver ions has high transparency of a liquid when being dispersed in the resin, which produces the favorable external appearance of the molded product. Furthermore, in the case where the second thermosetting resin containing the antibacterial agent directly adheres to the shaping compound, although not visible by the naked eye, a spot is possibly observed on the antibacterial fiber-reinforced-resin composite molded article 210 through X-rays, which may be caused by poor dispersion of the antibacterial agent. Meanwhile, in the case where the foam is impregnated with the second thermosetting resin containing the antibacterial agent and adheres to the shaping compound, no spot is observed on the antibacterial fiber-reinforced-resin composite molded article 210 through the X-rays, and the antibacterial agent is favorably dispersed. Therefore, the antibacterial fiber-reinforced-resin composite molded article 210 is suitable for an application transparent to the X-rays.

The concentration of the antibacterial agent in the second thermosetting resin containing the antibacterial agent is preferably 0.2 wt% to 2.0 wt%. In the case where the concentration of the antibacterial agent is excessively low, the antibacterial effect is degraded. On the contrary, in the case where the concentration of the antibacterial agent is excessively high, the cost is increased.

The second thermosetting resin is preferably the radically polymerizable resin that is reactable with the first thermosetting resin of the shaping compound. By adopting the radically polymerizable resins that is reactable with each other as the first thermosetting resin and the second thermosetting resin, the base material layer 211 and the antibacterial foam layer 221 can favorably adhere to and be integrated with each other during the thermocompression at the time of forming the base material layer 211 and the antibacterial foam layer 221. The radically polymerizable resin for the second thermosetting resin is a resin that is similar to the radical resin for the first thermosetting resin. The first thermosetting resin and the second thermosetting resin may be of the same type or different types.

The curing agent, the dispersant, the flame retardant, the UV absorber, or the like may be added to the second thermosetting resin containing the antibacterial agent when necessary. Preferably, the second thermosetting resin containing the antibacterial agent does not contain the curing agent. Even in the case where the second thermosetting resin containing the antibacterial agent does not contain the curing agent, the curing agent contained in the shaping compound and the second thermosetting resin containing the antibacterial agent mix with each other during the thermocompression at the time of forming the base material layer 211 and the antibacterial foam layer 221. In this way, the second thermosetting resin can be cured. In such a case, as the second thermosetting resin, a resin that is cured by the curing agent contained in the shaping compound is used. Because of not containing the curing agent, the second thermosetting resin containing the antibacterial agent eliminates the problem of the pot life, in which the curing reaction progresses before use, and can exert stable performance. The curing agent for the second thermosetting resin can be the same as that described for the shaping compound.

The thermosetting resin foam is preferably foam having a continuous bubble structure due to the favorable impregnation of the second thermosetting resin containing the antibacterial agent and due to suppression of the resin from flowing and breaking the foam during the thermocompression molding. Examples of the foam with the continuous bubble structure are urethane resin foam and melamine resin foam. The foam with the continuous bubble structure in which cell membranes are removed by known cell membrane removal treatment is further preferred in terms of the impregnation of the second thermosetting resin containing the antibacterial agent, the thermocompression molding, and the like. The cell membrane removal treatment includes a dissolution method, an explosion method, and the like.

Preferably, apparent density (JIS K 7222) of the thermosetting resin foam is 30 kg/m³ to 75 kg/m³, the number of cells (JIS K 6400-1) thereof is 8 cells/25 mm to 80 cells/25 mm, and a thickness thereof is 0.4 mm to 3.0 mm.

In the case where the number of cells in the thermosetting resin foam is excessively small, uniform impregnation of the resin becomes difficult. On the contrary, in the case where the number of cells is excessively large, the antibacterial foam layer 221 becomes less likely to be crushed during the compression molding, which results in a cell pattern remaining on the surface of the molded article and degrades the external appearance of the antibacterial fiber-reinforced-resin composite molded article 210.

Meanwhile, the excessively thin thermosetting resin foam becomes a cause of tearing during the compression molding. On the contrary, in the case of the excessively thick thermosetting resin foam, the antibacterial foam layer 221 becomes less likely to be crushed during the compression molding, which results in the cell pattern remaining on the surface of the molded article and degrades the external appearance of the antibacterial fiber-reinforced-resin composite molded article 210.

An impregnation amount of the second thermosetting resin containing the antibacterial agent in the thermosetting resin foam varies by the concentration of the antibacterial agent and the thickness of the thermosetting resin foam. However, the impregnation amount is preferably approximately 250 g/m² to 500 g/m² of the thermosetting resin foam, for example. In the case where the impregnation amount is small, the antibacterial effect is degraded. On the contrary, in the case where the impregnation amount is large, the cost is increased.

A description will be made on a method of producing the antibacterial fiber-reinforced-resin composite molded article 210.

The method of producing the antibacterial fiber-reinforced-resin composite molded article 210 includes an impregnation step and a thermocompression molding step.

In the impregnation step, first, the antibacterial agent and the second thermosetting resin are stirred and mixed together with the curing agent, the dispersant, the flame retardant, the UV absorber, or the like, which is added when necessary, to prepare the second thermosetting resin containing the antibacterial agent.

The antibacterial agent, the second thermosetting resin, the curing agent, and the like are as described above. The concentration of the antibacterial agent is preferably 0.2 wt% to 2.0 wt% of the thermosetting resin.

The thermosetting resin foam is impregnated with the second thermosetting resin containing the antibacterial agent, which has been prepared at the specified concentration. The thermosetting resin foam is as described above.

The method of impregnating the thermosetting resin foam with the second thermosetting resin containing the antibacterial agent can be a known method, and examples of such a method are immersion (dipping), brushing, the roller application, and the spray application. For example, in the case of the immersion method, the thermosetting resin foam is immersed in the second thermosetting resin containing the antibacterial agent, which is accommodated in a container or the like, to impregnate the thermosetting resin foam with the second thermosetting resin containing the antibacterial agent. Thereafter, the thermosetting resin foam is taken out, and the excess second thermosetting resin containing the antibacterial agent is removed from the thermosetting resin foam by compression using a roller or the like.

In the thermocompression molding step, the shaping compound and the thermosetting resin foam impregnated with the second thermosetting resin containing the antibacterial agent are superimposed and subjected to the thermocompression.

The shaping compound includes the fibers and the first thermosetting resin as described above, and the SMC is preferred.

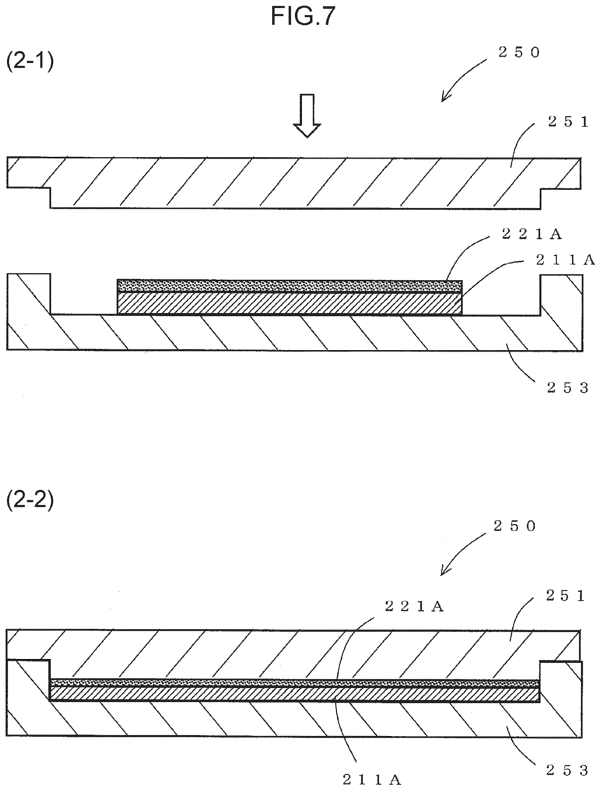

A description will be made on one embodiment of the thermocompression in the case where a shaping mold 250 illustrated in FIG. 7 (2-1) is used. The shaping mold 250 includes an upper mold 251 and a lower mold 253. Mold surfaces of the upper mold 251 and the lower mold 253 each have an uneven shape, a flat shape, or the like corresponding to the surface of the antibacterial fiber-reinforced-resin composite molded article 210 and each have the flat shape in this embodiment.

The shaping mold 250 is heated to a specified temperature by placing the shaping mold 250 in the furnace in advance or by the heating means (for example, the electric heater) provided to the shaping mold 250. The heating temperature is set to a temperature at which the first thermosetting resin and the second thermosetting resin are cured.

As illustrated in FIG. 7 (2-1), in an open state of the shaping mold 250, a shaping compound 211A and a thermosetting resin foam 221A, which is impregnated with the second thermosetting resin containing the antibacterial agent, are superimposed and arranged on a mold surface of the lower mold 253. Any of the shaping compound 211A and the thermosetting resin foam 221A, which is impregnated with the second thermosetting resin containing the antibacterial agent, may be placed on an upper side or a lower side of the other. Here, a mold release agent is preferably applied to the mold surfaces of the upper mold 251 and the lower mold 253 in advance.

After superimposing and arranging the shaping compound 211A and the thermosetting resin foam 221A, which is impregnated with the second thermosetting resin containing the antibacterial agent, as illustrated in FIG. 7 (2-2), the upper mold 251 is placed on the lower mold 253, and the shaping compound 211A and the thermosetting resin foam 221A, which is impregnated with the second thermosetting resin containing the antibacterial agent, are heated and compressed at the temperature at which the first thermosetting resin and the second thermosetting resin are cured.

Due to the thermocompression, the shaping compound 211A and the thermosetting resin foam 221A, which is impregnated with the second thermosetting resin containing the antibacterial agent, obtain an expanded flat shape. At the same time, the first thermosetting resin, the curing agent, and the like are exuded from the shaping compound 211A while the second thermosetting resin is exuded from the thermosetting resin foam 221A, which is impregnated with the second thermosetting containing the antibacterial agent. Then, those come in contact and are mixed on a boundary surface between the shaping compound 211A and the thermosetting resin foam 221A, which is impregnated with the second thermosetting resin containing the antibacterial agent.

As a result, the first thermosetting resin and the second thermosetting resin are cured to form the base material layer 211 from the shaping compound 211A and to form the antibacterial foam layer 221 from the thermosetting resin foam 221A, which is impregnated with the second thermosetting resin containing the antibacterial agent. In this way, the antibacterial fiber-reinforced-resin composite molded article 210, in which those are laminated and integrated, is obtained.

Here, even in the case where the second thermosetting resin containing the antibacterial agent does not contain the curing agent, as long as the shaping compound 211A contains the curing agent, the curing agent, which is exuded from the shaping compound 211A by the compression, and the second thermosetting resin are mixed and can be cured.

The base material layer 211 and the antibacterial foam layer 221 are integrated when the first thermosetting resin, which is exuded from the shaping compound 211A, and the second thermosetting resin, which is exuded from the thermosetting resin foam 221A impregnated with the second thermosetting resin containing the antibacterial agent, come in contact with each other on a boundary surface between the shaping compound 211A and the thermosetting resin foam 221A impregnated with the second thermosetting resin containing the antibacterial agent and are cured, or when one of the first thermosetting resin and the second thermosetting resin enters the other and both thereof are cured.

### [Examples of Third Embodiment]

### • Example 21

The silver-based antibacterial agent (manufactured by Sinanen Zeomic Co., Ltd., product name: IM10D-L) of 20 g, in which the glass carried the silver ions, was added to the vinyl ester resin (manufactured by Showa Denko K.K., product name: Lipoxy R-806) of 980 g, and the mixture was stirred for 5 minutes at the rotation speed of 1000 rpm using the stirrer (manufactured by AS ONE CORPORATION, product name: High-Speed Stirrer ST-200) to prepare the second thermosetting resin A containing the antibacterial agent (not containing the curing agent) with the concentration 2.0 wt% of the antibacterial agent.

The thermosetting resin foam (urethane resin foam subjected to the cell membrane removal treatment (the continuous bubble structure), manufactured by INOAC CORPORATION, product name: MF-50, apparent density (JIS K 7222) 30 kg/m³, number of cells (JIS K 6400-1) 50 cells/25 mm, porosity 97.1%, thickness 0.4 mm) was cut to 150 mm × 200 mm, was immersed in the second thermosetting resin A containing the antibacterial agent (not containing the curing agent), and was thereafter subjected to squeezing step using a roller to obtain 12 g of the impregnation amount, so as to prepare the thermosetting resin foam impregnated with the second thermosetting resin containing the antibacterial agent. A formula for calculating the porosity is as follows. Porosity = (true specific gravity of the urethane resin - apparent density)/true specific gravity of the urethane resin × 100

Here, the true specific gravity of the urethane resin is 1.05.

The shaping mold was heated to 130 °C. The shaping mold was opened to apply the mold release agent to the mold surface. Thereafter, at the center of the mold surface (200 mm × 300 mm) of the lower mold, the shaping compound (SMC, manufactured by Mitsubishi Chemical Corporation, product name: STR120N131, thickness 2 mm, fiber content 53%), which was cut to the size of 150 mm × 200 mm (weight 90 g), and the thermosetting resin foam, which is impregnated with the second thermosetting resin A containing the antibacterial agent, are superimposed and arranged. Then, the shaping mold was closed and subjected to the thermocompression for 10 minutes at the pressure of 10 MPa. Thereafter, the shaping mold 250 was opened to take out a molded article in Example 21. The molded article in Example 21 did not have a sticky surface and could be demolded without problems. The size of the molded article was 200 mm × 300 mm and 1.0 mm in thickness.

### • Example 22

Except for the thickness of the thermosetting resin foam in Example 21 being set to 0.6 mm, the molded article in Example 22 was prepared in the same manner as that in Example 21. The molded article in Example 22 did not have the sticky surface and could be demolded without problems. The size of the molded article was 200 mm × 300 mm and 1.0 mm in thickness.

### • Example 23

Except for the thickness of the thermosetting resin foam in Example 21 being set to 1.0 mm, the molded article in Example 23 was prepared in the same manner as that in Example 21. The molded article in Example 23 did not have the sticky surface and could be demolded without problems. The size of the molded article was 200 mm × 300 mm and 1.0 mm in thickness.

### • Example 24

For the second thermosetting resin containing the antibacterial agent, the unsaturated polyester resin (manufactured by Showa Denko K.K., product name: RIGOLAC T-543TPA) was used. The rest was prepared in the same manner as for the preparation of the second thermosetting resin A containing the antibacterial agent, and a second thermosetting resin B containing the antibacterial agent (not containing the curing agent) with concentration 2.0 wt% of the antibacterial agent was prepared. Except for the use of the second thermosetting resin B containing the antibacterial agent (not containing the curing agent), the molded article in Example 24 was prepared in the same manner as that in Example 23. The molded article in Example 24 did not have the sticky surface and could be demolded without problems. The size of the molded article was 200 mm × 300 mm and 1.0 mm in thickness.

### • Example 25

For the second thermosetting resin containing the antibacterial agent, 970 g of the vinyl ester resin (manufactured by Showa Denko K.K., product name: Lipoxy R-806) was used, and 10 g of the curing agent (manufactured by NOF CORPORATION, product name: PERCURE HI) was added thereto. Except for the above, a second thermosetting resin C containing the antibacterial agent (containing the curing agent) with the concentration 2.0 wt% of the antibacterial agent was prepared in the same manner as for the preparation of the second thermosetting resin A containing the antibacterial agent. Except for the use of the second thermosetting resin C containing the antibacterial agent (containing the curing agent), the molded article in Example 25 was prepared in the same manner as that in Example 23. The molded article in Example 25 did not have the sticky surface and could be demolded without problems. The size of the molded article was 200 mm × 300 mm and 1.0 mm in thickness.

### • Example 26

Except for the thickness of the thermosetting resin foam in Example 21 being set to 2.0 mm, the molded article in Example 26 was prepared in the same manner as that in Example 21. The molded article in Example 26 did not have the sticky surface and could be demolded without problems. The size of the molded article was 200 mm × 300 mm and 1.1 mm in thickness.

### • Example 27

Except for the thickness of the thermosetting resin foam in Example 21 being set to 3.0 mm, the molded article in Example 27 was prepared in the same manner as that in Example 21. The molded article in Example 27 did not have the sticky surface and could be demolded without problems. The size of the molded article was 200 mm × 300 mm and 1.2 mm in thickness.

### • Example 28

Instead of the thermosetting resin foam in Example 21, urethane resin foam (manufactured by INOAC CORPORATION, product name: MF-80A, continuous bubble structure), which was subjected to the cell membrane removal treatment and had the number of cells (JIS K 6400-1) 80 cells/25 mm, the porosity 95.2%, the apparent density (JIS K 7222) 75 kg/m³, and a thickness 1.0 mm, was used. Except for the above, the molded article in Example 28 was prepared in the same manner as that in Example 21. The molded article in Example 28 did not have the sticky surface and could be demolded without problems. The size of the molded article was 200 mm × 300 mm and 1.1 mm in thickness.

### • Example 29

Instead of the thermosetting resin foam in Example 21, urethane resin foam (manufactured by INOAC CORPORATION, product name: MF-10, continuous bubble structure), which was subjected to the cell membrane removal treatment and had the number of cells (JIS K 6400-1) 10 cells/25 mm, the porosity 97.3%, the apparent density (JIS K 7222) 30 kg/m³, and a thickness 1.0 mm, was used. Except for the above, the molded article in Example 29 was prepared in the same manner as that in Example 21. The molded article in Example 29 did not have the sticky surface and could be demolded without problems. The size of the molded article was 200 mm × 300 mm and 1.0 mm in thickness.

### • Example 30

Instead of the thermosetting resin foam in Example 21, a urethane resin foam (manufactured by INOAC CORPORATION, product name: MF-8, continuous bubble structure), which was subjected to the cell membrane removal treatment and had the number of cells (JIS K 6400-1) 8 cells/25 mm, the porosity 97.4%, the apparent density (JIS K 7222) 30 kg/m³, and the thickness 1.0 mm, was used. Except for the above, the molded article in Example 30 was prepared in the same manner as that in Example 21. The molded article in Example 30 did not have the sticky surface and could be demolded without problems. The size of the molded article was 200 mm × 300 mm and 1.0 mm in thickness.

### • Example 31

Instead of the thermosetting resin foam in Example 21, urethane resin foam (manufactured by INOAC CORPORATION, product name: MF-50, continuous bubble structure), which was not subjected to the cell membrane removal treatment and had the number of cells (JIS K 6400-1) 50 cells/25 mm, the porosity 97.0%, the apparent density (JIS K 7222) 30 kg/m³, and the thickness 1.0 mm, was used. Except for the above, the molded article in Example 31 was prepared in the same manner as that in Example 21. The molded article in Example 26 did not have the sticky surface and could be demolded without problems. The size of the molded article was 200 mm × 300 mm and 1.0 mm in thickness.

### • Example 32

For the second thermosetting resin containing the antibacterial agent, the silver-based antibacterial agent (manufactured by Sinanen Zeomic Co., Ltd., product name: IM10D-L) of 2 g, in which the glass carried the silver ions, was added to the vinyl ester resin (manufactured by Showa Denko K.K., product name: Lipoxy R-806) of 998 g, and the mixture was stirred for 5 minutes at the rotation speed of 1000 rpm using the stirrer (manufactured by AS ONE CORPORATION, product name: High-Speed Stirrer ST-200) to prepare a second thermosetting resin D containing the antibacterial agent (not containing the curing agent) with the concentration 0.2 wt% of the antibacterial agent. Except for the use of the second thermosetting resin D containing the antibacterial agent (not containing the curing agent), the molded article in Example 32 was prepared in the same manner as that in Example 21. The molded article in Example 32 did not have the sticky surface and could be demolded without problems. The size of the molded article was 200 mm × 300 mm and 1.0 mm in thickness.

### • Comparative Example 21

Except that the second thermosetting resin A containing the antibacterial agent (not containing the curing agent) of 12 g was directly applied to the surface of the SMC material and that the thermosetting resin foam was not used, the molded article in Comparative Example 21 was prepared in the same manner as that in Example 21. The molded article in Comparative Example 21 did not have the sticky surface and could be demolded without problems. The size of the molded article was 200 mm × 300 mm and 1.0 mm in thickness.

### • Comparative Example 22

For the second thermosetting resin containing the antibacterial agent, the silver-based antibacterial agent (manufactured by Sinanen Zeomic Co., Ltd., product name: IM10D-L) of 1 g, in which the glass carried the silver ions, was added to the vinyl ester resin (manufactured by Showa Denko K.K., product name: Lipoxy R-806) of 999 g, and the mixture was stirred for 5 minutes at the rotation speed of 1000 rpm using the stirrer (manufactured by AS ONE CORPORATION, product name: High-Speed Stirrer ST-200) to prepare a second thermosetting resin E containing the antibacterial agent (not containing the curing agent) with the concentration 0.1 wt% of the antibacterial agent. Except for the use of the second thermosetting resin E containing the antibacterial agent (not containing the curing agent), the molded article in Comparative Example 22 was prepared in the same manner as that in Example 23. The molded article in Comparative Example 22 did not have the sticky surface and could be demolded without problems. The size of the molded article was 200 mm × 300 mm and 1.0 mm in thickness.

The external appearance of the molded article, confirmation of dispersibility of the antibacterial agent by the X-rays, and the antibacterial performance (the antibacterial activity value) were determined or measured for the molded articles in Examples and Comparative Examples.

For the external appearance of the molded article, the surface of the molded article was visually observed and compared with the surface of the molded article only with the SMC material. The molded article was evaluated as "Double-circle" when no change was observed, "o" when slight clouding was observed, and "×" when clear clouding was observed. In the case of an application as an exterior part, the molded article is preferably free of cloudiness.

For the confirmation of the dispersibility of the antibacterial agent by the X-rays, the molded articles were evaluated for the dispersibility of the antibacterial agent by using an X-ray tester (manufactured by Matsusada Precision Inc., product name: µRay8000) with a tube voltage: 60 kV and output: 6 W. In the case where the antibacterial agent is uniformly dispersed in the thermosetting resin foam, an image of the entire molded article is uniform. On the contrary, in the case where the antibacterial agent is not dispersed uniformly, an image with partial spots is obtained. Accordingly, the case where the uniform image was obtained was evaluated as "o" while the case where the image has the partial spots was evaluated as "×".

To test the antibacterial performance, a total of five test pieces for antibacterial activity in size of 50 mm × 50 mm were cut from the four corners and the center of the molded article. Then, these test pieces for antibacterial activity were used to measure against Escherichia coli and Staphylococcus aureus according to the five test methods in JIS Z 2801:2012 "Antibacterial products-Test for antibacterial activity and efficacy". For evaluation of the antibacterial performance, it was determined that the antibacterial effect was present in the case where the antibacterial activity value was 2.0 or higher.

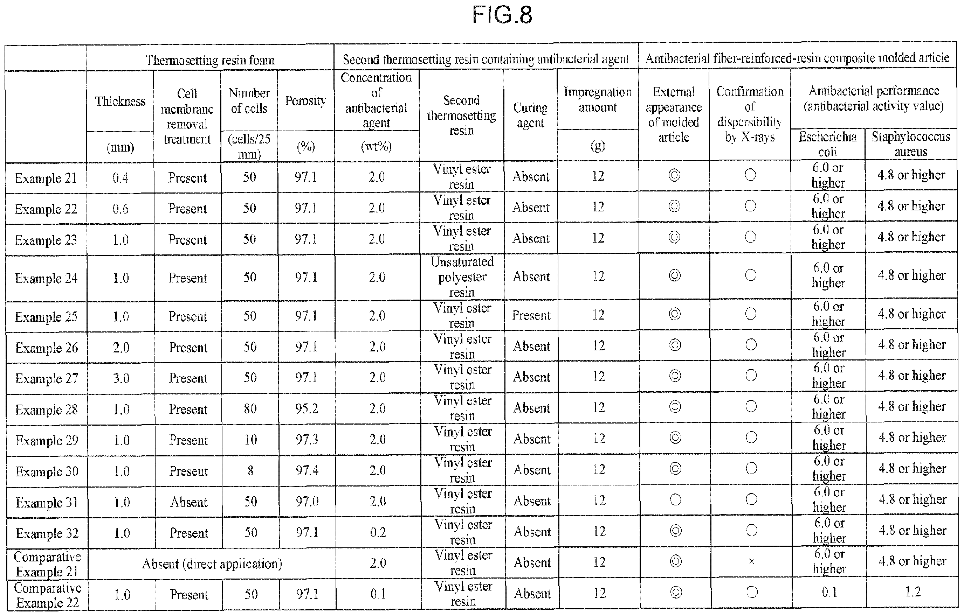

FIG. 8 illustrates the configurations and the results in Examples and Comparative Examples.

In Example 21 to Example 32, the concentration of the antibacterial agent in the second thermosetting resin containing the antibacterial agent was 0.2 wt% or 2.0 wt%, the external appearance of the molded article was "Double-circle" or "o", and the confirmation of the dispersibility by the X-rays was "o". In any of Examples 21 to 32, in regard to the antibacterial performance, the antibacterial activity value against Escherichia coli was 6.0 or higher, the antibacterial activity value against Staphylococcus aureus was 4.8 or higher, and thus the antibacterial effect was favorable.

Comparative Example 21 is an example in which the second thermosetting resin containing the antibacterial agent was directly applied to the surface of the SMC material, the external appearance of the molded article was "Double-circle", and the confirmation of the dispersibility by the X-rays was "×". In regard to the antibacterial performance, the antibacterial activity value against Escherichia coli was 6.0 or higher, the antibacterial activity value against Staphylococcus aureus was 4.8 or higher, and thus the antibacterial effect was favorable. In Comparative Example 21, the thermosetting resin foam was not laminated, and the second thermosetting resin containing the antibacterial agent was directly applied to the surface of the SMC material. Accordingly, the antibacterial agent was not dispersed uniformly.

Comparative Example 22 is an example in which the concentration of the antibacterial agent in the second thermosetting resin containing the antibacterial agent was set to 0.1%, the external appearance of the molded article was "Double-circle", and the confirmation of the dispersibility by the X-rays was "o". In regard to the antibacterial performance, the antibacterial activity value against Escherichia coli was 0.1, the antibacterial activity value against Staphylococcus aureus was 1.2, and thus no antibacterial effect was observed. In Comparative Example 22, no antibacterial effect was observed due to 0.1% of the low concentration of the antibacterial agent in the second thermosetting resin containing the antibacterial agent.

As described above, according to the present disclosure, the antibacterial fiber-reinforced-resin composite molded article can have the favorable external surface appearance by the antibacterial foam layer, which is laminated to the base material layer. In addition, the antibacterial agent is dispersed uniformly due to the second thermosetting resin containing the antibacterial agent, which is impregnated in the antibacterial foam layer. Therefore, the antibacterial fiber-reinforced-resin composite molded article has the high antibacterial performance. In addition, since the base material layer is formed from the shaping compound in the antibacterial fiber-reinforced-resin composite molded article, which is obtained in the present disclosure, the base material layer can be formed in the complex shape, and the antibacterial fiber-reinforced-resin composite molded article is also preferred for the application requesting the complex shape.

### [Fourth Embodiment]

A description will hereinafter be made on a fiber-reinforced-resin laminated molded article and a method of producing the same in a fourth embodiment of the present disclosure.

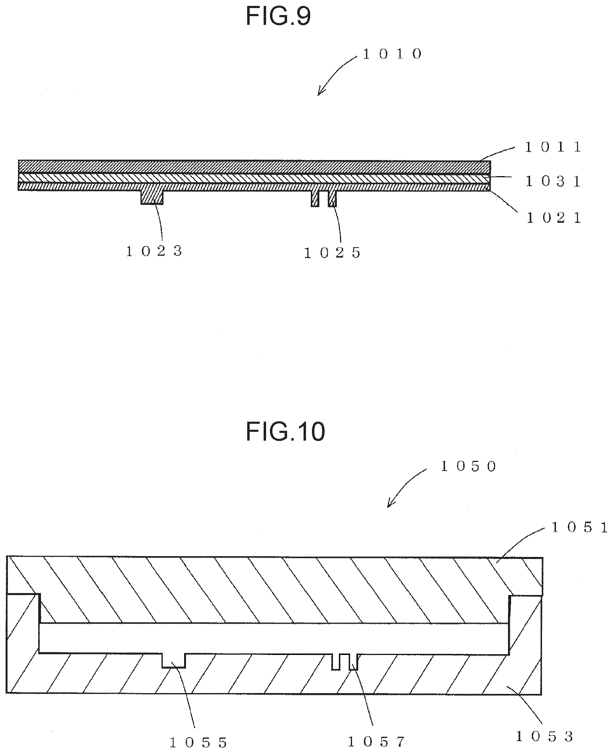

A fiber-reinforced-resin laminated molded article 1010 in a first aspect of the fourth embodiment illustrated in FIG. 9 includes: a surface layer portion 1011 that is formed from a fiber-reinforced-resin material for forming a surface layer portion; a base layer portion 1021 that is formed from a compound for forming a base layer portion; and an intermediate layer portion 1031 that is arranged between the surface layer portion 1011 and the base layer portion 1021 and is formed from a thermosetting resin foam sheet with the continuous bubble structure. The fiber-reinforced-resin laminated molded article 1010 is free from problems caused by disturbance of fibers in the surface layer portion 1011 and a void from the compound for forming a base layer portion, and has favorable external appearance. Which of the surface layer portion 1011 and the base layer portion 1021 is used as a front surface or a back surface of the fiber-reinforced-resin laminated molded article 1010 is determined according to an application of the fiber-reinforced-resin laminated molded article 1010 or the like.

The surface layer portion 1011 is formed by heating, compressing, and curing the fiber-reinforced-resin material for forming a surface layer portion.

The fiber-reinforced-resin material for forming a surface layer portion is formed by impregnating the fiber sheet with the thermosetting resin. The fiber sheet can be formed of the fibers such as the carbon fibers, the glass fibers, or the aramid fibers. In particular, the carbon fibers are preferred in terms of the weight reduction and the improved rigidity. The fiber sheet may be the woven fabric, the knitted fabric, the nonwoven fabric, or the like. The woven fabric includes the plain woven fabric, the twill woven fabric, the sateen woven fabric, the triaxial woven fabric, and the like. The fiber sheet may include the fibers that are oriented in one direction or plural directions. The fiber sheet is preferably the fiber woven fabric in terms of the improved rigidity.

Each of the fibers constituting the fiber sheet is preferably longer in fiber length than the fiber included in the compound for forming a base layer portion, which will be described below, and examples of such fibers are the continuous fibers or the discontinuous fibers.

Examples of the thermosetting resin with which the fiber sheet is impregnated are the epoxy resin, the phenol resin, the vinyl ester resin, and the mixed resin of these. The fiber-reinforced-resin material for forming a surface layer portion in which the fiber sheet is impregnated with the thermosetting resin is preferably the pre-preg.

The base layer portion 1021 is formed by heating, compressing, and curing the compound for forming a base layer portion, which is formed from the thermosetting resin and the shorter fibers than those included in the fiber-reinforced-resin material for forming a surface layer portion. The illustrated base layer portion 1021 has a reinforcing rib 1023 and a boss 1025 as convex portions protruding from the surface. A surface shape of the base layer portion 1021 is not limited to a shape with the convex portions including the reinforcing rib 1023 and the boss 1025, but may be an appropriate concave, convex, uneven, or flat shape according to an application of the fiber-reinforced-resin laminated molded article 1010, or the like.

A length of each of the fibers included in the compound for forming a base layer portion is preferably 30 mm or shorter in terms of the moldability, and is preferably 5 mm or longer in terms of the improved rigidity. Examples of the fibers included in the compound for forming a base layer portion are short fibers such as the carbon fibers or the glass fibers. In particular, the carbon fibers are preferred in terms of the weight reduction and the improved rigidity.

Examples of the thermosetting resin contained in the compound for forming a base layer portion are the epoxy resin, the phenol resin, the vinyl ester resin, the unsaturated polyester resin, and the mixed resin of these.

The sheet molding compound (hereinafter referred to as the SMC) is preferred as the compound for forming a base layer portion. The SMC is the sheet-like molding material that is formed by impregnating the fiber material such as the glass fiber or the carbon fiber with the compound containing the filler, the curing agent, and the like in the thermosetting resin.

In the intermediate layer portion 1031, the thermosetting resin foam sheet with the continuous bubble structure is arranged between the fiber-reinforced-resin material for forming a surface layer portion and the compound for forming a base layer portion, is heated and compressed together with the fiber-reinforced-resin material for forming a surface layer portion and the compound for forming a base layer portion, and contacts or is impregnated with the thermosetting resin, with which the fiber-reinforced-resin material for forming a surface layer portion and the compound for forming a base layer portion are impregnated. As a result, the thermosetting resin is cured. In a state where the thermosetting resin foam sheet with the continuous bubble structure is compressed, the intermediate layer portion 1031 is fixed in shape by curing the thermosetting resin.

Examples of the thermosetting resin foam sheet with the continuous bubble structure are sheets formed from the urethane resin foam and the melamine resin foam. By using the thermosetting resin foam with the continuous bubble structure, the thermosetting resin foam sheet can be impregnated with the thermosetting resin, and the thermosetting resin foam sheet can easily be compressed. Furthermore, it is possible to release the volatile from the SMC during production of the fiber-reinforced-resin laminated molded article 1010 and to thereby prevent generation of the void. In the case where the thermosetting resin foam sheet with the continuous bubble structure is formed from the urethane resin foam, the number of cells (JIS K 6400-1) is preferably 5 to 90 cells/25 mm. In the case where the value of the number of cells is excessively small, a diameter of each of the cells is increased, which reduces strength. On the other hand, in the case where the value of the number of cells is excessively large, the diameter of the cells is reduced, which degrades air permeability.

In addition, by forming the intermediate layer portion 1031 from the thermosetting resin foam sheet with the continuous bubble structure, the thermosetting resin foam sheet having the continuous bubble structure does not soften or fuse during the thermocompression at the time of producing the fiber-reinforced-resin laminated molded article 1010. In this way, it is possible to prevent, with the thermosetting resin foam sheet with the continuous bubble structure, an adverse effect on the fiber-reinforced-resin material for forming a surface layer portion caused by a flow of the compound for forming a base layer portion during the thermocompression.

During the production of the fiber-reinforced-resin laminated molded article 1010, the surface layer portion 1011, the base layer portion 1021, and the intermediate layer portion 1031 are integrated when the fiber-reinforced-resin material for forming a surface layer portion and the compound for forming a base layer portion are laminated with the thermosetting resin foam sheet with the continuous bubble structure being interposed therebetween and are heated and compressed to cure the thermosetting resins in the fiber-reinforced-resin material for forming a surface layer portion and the compound for forming a base layer portion are cured.

In a method of producing the fiber-reinforced-resin laminated molded article 1010, the fiber-reinforced-resin material for forming a surface layer portion and the compound for forming a base layer portion are laminated with the thermosetting resin foam sheet with the continuous bubble structure being interposed therebetween and are then heated and compressed, and the thermosetting resins contained in the fiber-reinforced-resin material for forming a surface layer portion and the compound for forming a base layer portion are cured in the compressed state.

A description will be made on one embodiment of the thermocompression in the case where a shaping mold 1050 illustrated in FIG. 10 is used. The shaping mold 1050 includes an upper mold 1051 and a lower mold 1053. In the embodiment, a mold surface of the upper mold 1051 is flat. A mold surface of the lower mold 1053 has a shape that corresponds to a surface of the base layer portion 1021 in the fiber-reinforced-resin laminated molded article 1010. In the embodiment, the mold surface of the lower mold 1053 is provided with molding recesses 1055, 1057 used to form the reinforcing rib 1023 and the boss 1025 of the fiber-reinforced-resin laminated molded article 1010.

The shaping mold 1050 is heated to a specified temperature by placing the shaping mold 1050 in the furnace in advance or by the heating means (for example, the electric heater) provided to the shaping mold 1050. A heating temperature is set at a temperature at which the thermosetting resins contained in the fiber-reinforced-resin material for forming a surface layer portion and the compound for forming a base layer portion are cured.

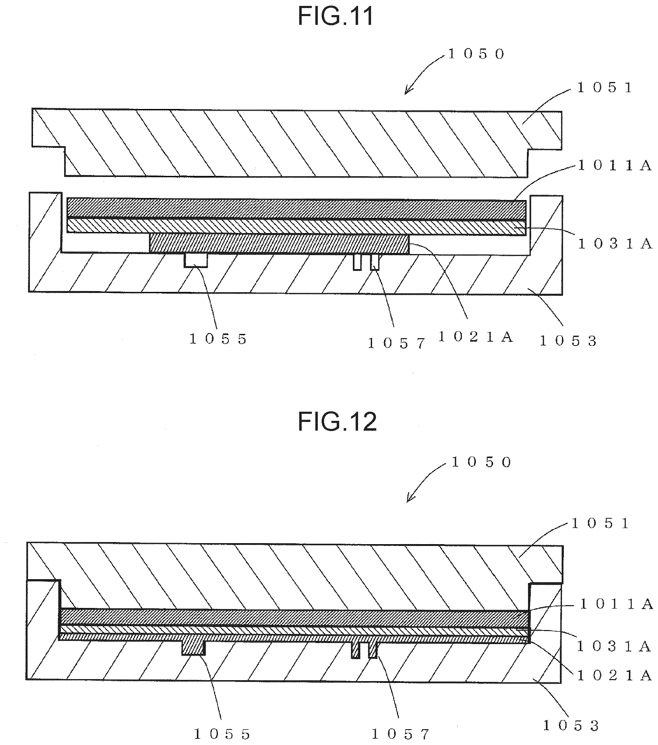

As illustrated in FIG. 11, in a state where the shaping mold 1050 is opened, a compound 1021A for forming a base layer portion, a thermosetting resin foam sheet 1031A with the continuous bubble structure, and a fiber-reinforced-resin material 1011A for forming a surface layer portion are superimposed in this order, arranged, and laminated on the mold surface of the lower mold 1053. Here, the mold release agent is preferably applied to the mold surfaces of the upper mold 1051 and the lower mold 1053 in advance.

In the compound 1021A for forming a base layer portion, the short fibers such as the carbon fibers or the glass fibers are impregnated with the thermosetting resin such as the epoxy resin, the phenol resin, the vinyl ester resin, the unsaturated polyester resin, or the mixed resin thereof as described above, and the SMC is preferred. Each of the fibers included in the compound 1021A for forming a base layer portion is shorter than each of the fibers included in the fiber-reinforced-resin material 1011A for forming a surface layer portion, is preferably 30 mm or shorter in terms of the moldability, and is preferably 5 mm or longer in terms of the improved rigidity.

The compound 1021A for forming a base layer portion is placed on the mold surface of the lower mold 1053 in a manner to cover the molding recesses 1055, 1057. The compound 1021A for forming a base layer portion is in size capable of covering the molding recesses 1055, 1057 and may be equal in size to the mold surface of the lower mold 1053.

The thermosetting resin foam sheet 1031A with the continuous bubble structure is formed from the thermosetting resin foam with the continuous bubble structure, such as the urethane resin foam or the melamine resin foam, as described above, and may be impregnated with the thermosetting resin such as the epoxy resin, the phenol resin, the vinyl ester resin, or the mixed resin thereof in advance. In the case where the thermosetting resin foam sheet having the continuous bubble structure is formed from the urethane resin foam, the number of cells (JIS K 6400-1) is 5 cells/25 mm to 90 cells/25 mm, and the apparent density (JIS K 7222) is preferably 20 kg/m³ to 100 kg/m³ and is further preferably 30 kg/m³ to 75 kg/m³. Furthermore, in order to ensure the air permeability, it is preferred to perform the known cell membrane removal treatment. Moreover, the excessively thin thermosetting resin foam sheet with the continuous bubble structure causes problems related to the external appearance such as the disturbance of the fibers, the void, and the like in the surface layer portion 1011. On the contrary, in the case where the thermosetting resin foam sheet with the continuous bubble structure is excessively thick, strength of the fiber-reinforced-resin laminated molded article 1010 is reduced. Thus, the thickness of the thermosetting resin foam sheet with the continuous bubble structure is preferably 0.3 mm to 3.0 mm.

In the case where the thermosetting resin adheres to the thermosetting resin foam sheet with the continuous bubble structure in advance, or in the case where the thermosetting resin foam sheet with the continuous bubble structure is impregnated with the thermosetting resin in advance, such methods are not limited to dipping, in which the thermosetting resin foam sheet with the continuous bubble structure is soaked with the thermosetting resin, or the application. For example, by causing the thermosetting resin foam sheet with the continuous bubble structure to adhere to the fiber-reinforced-resin material 1011A for forming a surface layer portion and the compound 1021A for forming a base layer portion (including the laminated layers), the thermosetting resin, which adheres to the surfaces of the fiber-reinforced-resin material 1011A for forming a surface layer portion and the compound 1021A for forming a base layer portion, may adhere to the thermosetting resin foam sheet with the continuous bubble structure, or the thermosetting resin foam sheet with the continuous bubble structure may be impregnated with such a thermosetting resin.

Alternatively, when the fiber-reinforced-resin material 1011A for forming a surface layer portion, the thermosetting resin foam sheet 1031A with the continuous bubble structure, and the compound 1021A for forming a base layer portion are heated and compressed, the thermosetting resin foam sheet 1031A with the continuous bubble structure may be impregnated with the thermosetting resin that is exuded from the fiber-reinforced-resin material 1011A for forming a surface layer portion and the compound 1021A for forming a base layer portion.

The thermosetting resin foam sheet 1031A with the continuous bubble structure is arranged in the lower mold 1053 in a manner to cover the compound 1021A for forming a base layer portion. The size of the thermosetting resin foam sheet 1031A with the continuous bubble structure is preferably equal to a flow range of the compound 1021A for forming a base layer portion, or is preferably size covering a larger range than the flow range in order to prevent the fiber-reinforced-resin material 1011A for forming a surface layer portion from being influenced by the flow of the compound 1021A for forming a base layer portion.

The fiber-reinforced-resin material 1011A for forming a surface layer portion is formed by impregnating the fiber sheet such as the carbon fiber fabric with the thermosetting resin such as the epoxy resin, the phenolic resin, the vinyl ester resin, or the mixed resin of these as described above, and is preferably the pre-preg. The fibers in the fiber sheet are preferably longer than the fibers included in the compound for forming a base layer portion. Here, the fiber-reinforced-resin material 1011A for forming a surface layer portion is not limited to one formed from a single piece of the pre-preg, but may be one formed by laminating plural pieces of the pre-preg.

The compound 1021A for forming a base layer portion, the thermosetting resin foam sheet 1031A with the continuous bubble structure, and the fiber-reinforced-resin material 1011A for forming a surface layer portion are laminated in this order on the mold surface of the lower mold 1053. Thereafter, as illustrated in FIG. 12, the upper mold 1051 is placed on the lower mold 1053, and the compound 1021A for forming a base layer portion, the thermosetting resin foam sheet 1031A with the continuous bubble structure, and the fiber-reinforced-resin material 1011A for forming a surface layer portion are heated and compressed in the layered state.

In the case where the molding recess or convex is provided not in the mold surface of the lower mold but in the mold surface of the upper mold, on the mold surface of the lower mold, the fiber-reinforced-resin material 1011A for forming a surface layer portion, the thermosetting resin foam sheet 1031A with the continuous bubble structure, and the compound 1021A for forming a base layer portion are laminated in this order.

Alternatively, in the case where the molding recess or convex is provided in neither the mold surface of the lower mold nor the mold surface of the upper mold, laminating arrangement of the fiber-reinforced-resin material 1011A for forming a surface layer portion, the thermosetting resin foam sheet 1031A with the continuous bubble structure, and the compound 1021A for forming a base layer portion on the mold surface of the lower mold may be in this order or in a reverse order.

A description will hereinafter be made on behavior of the compound 1021A for forming a base layer portion, the thermosetting resin foam sheet 1031A with the continuous bubble structure, and the fiber-reinforced-resin material 1011A for forming a surface layer portion during the thermocompression.

The compound 1021A for forming a base layer portion generates the flowability by heating, enters the molding recesses 1055, 1057 in the mold surface of the lower mold 1053, and further flows onto the mold surface of the lower mold 1053.

The thermosetting resin foam sheet 1031A with the continuous bubble structure is compressed between the compound 1021A for forming a base layer portion and the fiber-reinforced-resin material 1011A for forming a surface layer portion, and comes in contact with the thermosetting resins in the compound 1021A for forming a base layer portion and the fiber-reinforced-resin material 1011A for forming a surface layer portion or is impregnated therewith. In addition, the thermosetting resin foam sheet 1031A with the continuous bubble structure exerts a buffering effect at a position between the compound 1021A for forming a base layer portion and the fiber-reinforced-resin material 1011A for forming a surface layer portion, thereby prevents the fiber-reinforced-resin material 1011A for forming a surface layer portion from being influenced by the flow of the compound 1021A for forming a base layer portion, and prevents generation of the void by absorbing the volatile from the compound 1021A for forming a base layer portion.

The saturated thermosetting resin is exuded from the fiber-reinforced-resin material 1011A for forming a surface layer portion by compression. The thermosetting resin, which is exuded from the fiber-reinforced-resin material 1011A for forming a surface layer portion, contacts or saturates the thermosetting resin foam sheet 1031A with the continuous bubble structure.

Then, in the compressed state, the thermosetting resin in each of the compound 1021A for forming a base layer portion, the thermosetting resin foam sheet 1031A with the continuous bubble structure, and the fiber-reinforced-resin material 1011A for forming a surface layer portion is cured. In this way, the base layer portion 1021 is formed from the compound 1021A for forming a base layer portion, the intermediate layer portion 1031 is formed from the thermosetting resin foam sheet 1031A with the continuous bubble structure, and the surface layer portion 1011 is further formed from the fiber-reinforced-resin material 1011A for forming a surface layer portion. In conjunction with the above, the thermosetting resins therein contact each other or are mixed with each other, and are then cured. As a result, the base layer portion 1021, the intermediate layer portion 1031, and the surface layer portion 1011 adhere each other integrally to form the fiber-reinforced-resin laminated molded article 1010. The influence of the flow of the compound 1021A for forming a base layer portion on the fiber-reinforced-resin laminated molded article 1010 is mitigated by the thermosetting resin foam sheet 1031A with the continuous bubble structure. In addition, the volatile from the compound 1021A for forming a base layer portion is absorbed by the thermosetting resin foam sheet 1031A with the continuous bubble structure. Thus, it is possible to obtain the surface layer portion 1011 that has the complex shape and the favorable external appearance without the disturbance of the fibers, the void, and the like.

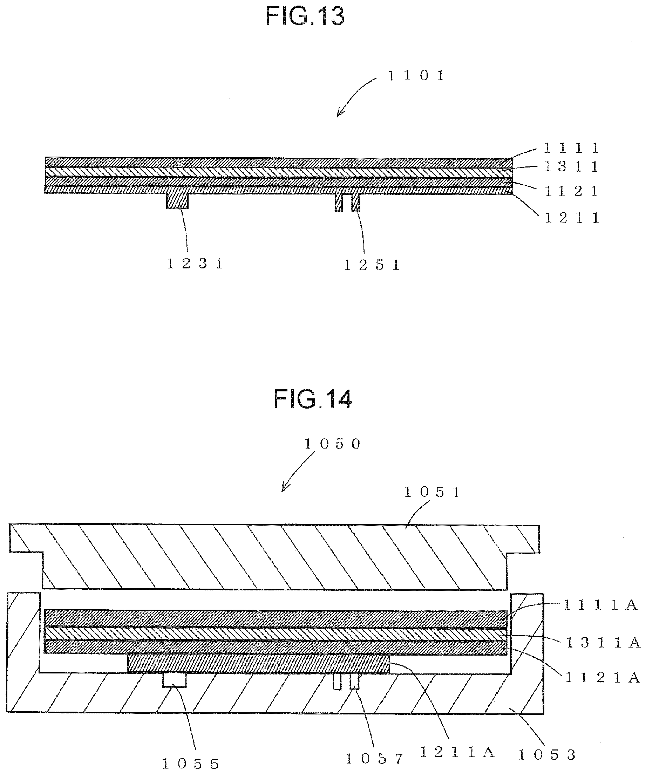

In a fiber-reinforced-resin laminated molded article 1101 in a second aspect of this embodiment illustrated in FIG. 13, a surface layer portion 1111, an intermediate layer portion 1311, a reinforcing layer portion 1121, and a base layer portion 1211 are laminated and integrated. The fiber-reinforced-resin laminated molded article 1101 differs from the fiber-reinforced-resin laminated molded article 1010 in the first aspect in a point that the reinforcing layer portion 1121 is provided between the intermediate layer portion 1311 and the base layer portion 1211.

The surface layer portion 1111 is formed from the fiber-reinforced-resin material for forming a surface layer portion, and has the same configuration as the surface layer portion 1011 in the first aspect.

The intermediate layer portion 1311 is formed from the thermosetting resin foam sheet with the continuous bubble structure, and has the same configuration as the intermediate layer portion 1031 in the first aspect.

The reinforcing layer portion 1121 is formed from a fiber-reinforced-resin material for forming a reinforcing layer portion. Similar to the fiber-reinforced-resin material for forming a surface layer portion, the fiber-reinforced-resin material for forming a reinforcing layer is formed by impregnating the fiber sheet with the thermosetting resin, and the pre-preg is preferred.

The base layer portion 1211 is formed from the compound for forming a base layer portion, and has the same configuration as the base layer portion 1021 in the first aspect. Fibers included in the compound for forming a base layer portion are shorter than fibers included in the fiber-reinforced-resin material for forming a surface layer portion and the fiber-reinforced-resin material for forming a reinforcing layer portion. On a surface of the base layer portion 1211, a reinforcing rib 1231 and a boss 1251 as convex portions are formed to be projected.

When the fiber-reinforced-resin laminated molded article 1101 is produced, due to the thermocompression in which the fiber-reinforced-resin material for forming a surface layer portion, the thermosetting resin foam sheet with the continuous bubble structure, the fiber-reinforced-resin material for forming a reinforcing layer portion, and the compound for forming a base layer portion are laminated, the thermosetting resins in the fiber-reinforced-resin material for forming a surface layer portion, the fiber-reinforced-resin material for forming a reinforcing layer portion, and the compound for forming a base layer portion exude, adhere to, and saturate the thermosetting resin foam sheet with the continuous bubble structure. Then, the exuded thermosetting resins contact each other or are mixed with each other and are then cured. In this way, the surface layer portion 1111, the intermediate layer portion 1311, the reinforcing layer portion 1121, and the base layer portion 1211 are integrated.

A method of producing the fiber-reinforced-resin laminated molded article 1101 in the second aspect will be described as follows.

As illustrated in FIG. 14, a compound 1211A for forming a base layer portion, a fiber-reinforced-resin material 1121A for forming a reinforcing layer portion, a thermosetting resin foam sheet 1311A with the continuous bubble structure, and a fiber-reinforced-resin material 1111A for forming a surface layer portion are arranged in this order and laminated on the mold surface of the lower mold 1053 of the shaping mold 1050. Here, the shaping mold 1050 is as described in the method of producing in the first aspect.

Next, the upper mold 1051 is placed on the lower mold 1053. Then, the compound 1211A for forming a base layer portion, the fiber-reinforced-resin material 1121A for forming a reinforcing layer portion, the thermosetting resin foam sheet 1311A with the continuous bubble structure, and the fiber-reinforced-resin material 1111A for forming a surface layer portion are heated and compressed in the layered state. Due to the thermocompression, the compound 1211A for forming a base layer portion flows and obtains the shape of the mold surface of the lower mold 1053. Meanwhile, the thermosetting resins exude from the compound 1211A for forming a base layer portion, the fiber-reinforced-resin material 1121A for forming a reinforcing layer portion, and the fiber-reinforced-resin material 1111A for forming a surface layer portion, and adhere to and saturate the thermosetting resin foam sheet 1311A with the continuous bubble structure. In addition, the exuded thermosetting resins are mixed with each other and are cured. In this way, the fiber-reinforced-resin laminated molded article 1101 illustrated in FIG. 13, in which the surface layer portion 1111, the intermediate layer portion 1311, the reinforcing layer portion 1121, and the base layer portion 1211 are laminated integrally, is obtained.

In the fiber-reinforced-resin laminated molded article 1101 of the second aspect, when the compound for forming a base layer portion flows and is shaped by the thermocompression, it is possible to mitigate the influence of the flow of the compound for forming a base layer portion and the influence of the volatile from the compound for forming a base layer portion by the thermosetting resin foam sheet with the continuous bubble structure. As a result, the surface layer portion 1111 obtains favorable external appearance. Furthermore, due to presence of the reinforcing layer portion 1121, strength and rigidity of the fiber-reinforced-resin laminated molded article 1101 are further improved.

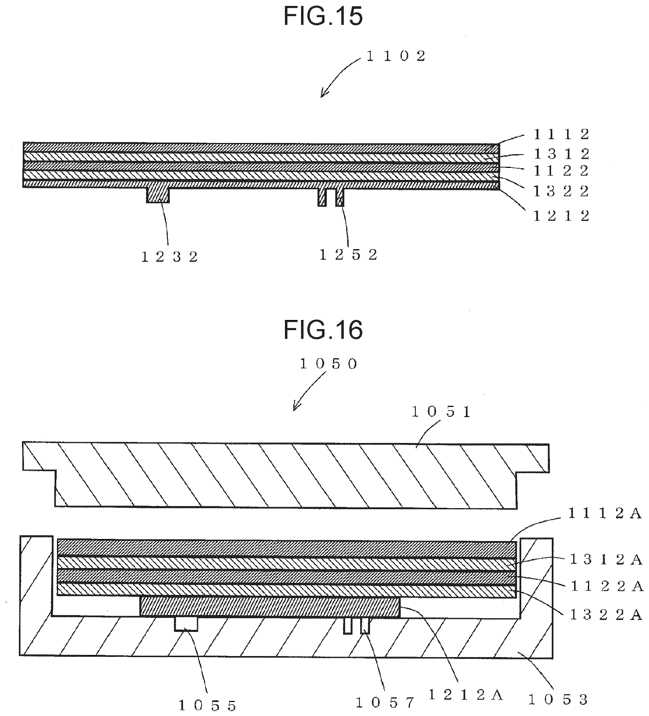

In a fiber-reinforced-resin laminated molded article 1102 in a third aspect of this embodiment illustrated in FIG. 15, a surface layer portion 1112, an intermediate layer portion 1312, a reinforcing layer portion 1122, a second intermediate layer portion 1322, and a base layer portion 1212 are laminated integrally. The fiber-reinforced-resin laminated molded article 1102 differs from the fiber-reinforced-resin laminated molded article 1010 in the first aspect in a point that the reinforcing layer portion 1122 and the second intermediate layer portion 1322 are provided between the intermediate layer portion 1312 and the base layer portion 1212. In addition, the fiber-reinforced-resin laminated molded article 1102 differs from the fiber-reinforced-resin laminated molded article 1101 in the second aspect in a point that the second intermediate layer portion 1322 is provided between the reinforcing layer portion 1122 and the base layer portion 1212.

The surface layer portion 1112 is formed from the fiber-reinforced-resin material for forming a surface layer portion, and has the same configuration as the surface layer portion 1011 in the first aspect and the surface layer portion 1111 in the second aspect.

The intermediate layer portion 1312 is formed from the thermosetting resin foam sheet with the continuous bubble structure, and has the same configuration as the intermediate layer portion 1031 in the first aspect and the intermediate layer portion 1311 in the second aspect.

The reinforcing layer portion 1122 is formed from the fiber-reinforced-resin material for forming a reinforcing layer portion, and has the same configuration as the reinforcing layer portion 1121 in the second aspect.

The second intermediate layer portion 1322 is formed from a second thermosetting resin foam sheet with a continuous bubble structure. The second thermosetting resin foam sheet with the continuous bubble structure is formed from the same material as the thermosetting resin foam sheet with the continuous bubble structure that constitutes the intermediate layer portion 1312.

The base layer portion 1212 is formed from the compound for forming a base layer portion, and has the same configuration as the base layer portion 1021 in the first aspect and the base layer portion 1211 in the second aspect. On a surface of the base layer portion 1212, a reinforcing rib 1232 and a boss 1252 as convex portions are formed to be projected.

When the fiber-reinforced-resin laminated molded article 1102 is produced, due to the thermocompression in which the fiber-reinforced-resin material for forming a surface layer portion, the thermosetting resin foam sheet with the continuous bubble structure, the fiber-reinforced-resin material for forming a reinforcing layer portion, the second thermosetting resin foam sheet with the continuous bubble structure, and the compound for forming a base layer portion are laminated, the thermosetting resins in the fiber-reinforced-resin material for forming a surface layer portion, the fiber-reinforced-resin material for forming a reinforcing layer portion, and the compound for forming a base layer portion exude, adhere to, and saturate the thermosetting resin foam sheet with the continuous bubble structure and the second thermosetting resin foam sheet with the continuous bubble structure. Then, the exuded thermosetting resins contact each other or are mixed with each other and are then cured. In this way, the surface layer portion 1112, the intermediate layer portion 1312, the reinforcing layer portion 1122, the second intermediate layer portion 1322, and the base layer portion 1212 are integrated.

A method of producing the fiber-reinforced-resin laminated molded article 1102 in the third aspect will be described as follows.

As illustrated in FIG. 16, a compound 1212A for forming a base layer portion, a second thermosetting resin foam sheet 1322A with the continuous bubble structure, a fiber-reinforced-resin material 1122A for forming a reinforcing layer portion, a thermosetting resin foam sheet 1312A with the continuous bubble structure, and a fiber-reinforced-resin material 1112A for forming a surface layer portion are arranged in this order and laminated on the mold surface of the lower mold 1053 of the shaping mold 1050. Here, the shaping mold 1050 is as described in the method of producing in the first aspect.

Next, the upper mold 1051 is placed on the lower mold 1053. Then, the compound 1212A for forming a base layer portion, the second thermosetting resin foam sheet 1322A with the continuous bubble structure, the fiber-reinforced-resin material 1122A for forming a reinforcing layer portion, the thermosetting resin foam sheet 1312A with the continuous bubble structure, and the fiber-reinforced-resin material 1112A for forming a surface layer portion are heated and compressed in the layered state. Due to the thermocompression, the compound 1212A for forming a base layer portion flows and obtains the shape of the mold surface of the lower mold 1053. Meanwhile, the thermosetting resins exude from the compound 1212A for forming a base layer portion, the fiber-reinforced-resin material 1122A for forming a reinforcing layer portion, and the fiber-reinforced-resin material 1112A for forming a surface layer portion, and adhere to and saturate the thermosetting resin foam sheet 1312A with the continuous bubble structure and the second thermosetting resin foam sheet 1322A with the continuous bubble structure. In addition, the exuded thermosetting resins are mixed with each other and are cured. In this way, the fiber-reinforced-resin laminated molded article 1102 illustrated in FIG. 15, in which the surface layer portion 1112, the intermediate layer portion 1312, the reinforcing layer portion 1122, the second intermediate layer portion 1322, and the base layer portion 1212 are laminated integrally, is obtained.

In the fiber-reinforced-resin laminated molded article 1102 of the third aspect, when the compound for forming a base layer portion flows and is shaped by the thermocompression, it is possible to mitigate the influence of the flow of the compound for forming a base layer portion and the influence of the volatile from the compound for forming a base layer portion by the thermosetting resin foam sheet with the continuous bubble structure and the second thermosetting resin foam sheet with the continuous bubble structure. As a result, the surface layer portion 1112 obtains favorable external appearance. Furthermore, due to presence of the reinforcing layer portion 1122, strength and rigidity of the fiber-reinforced-resin laminated molded article 1102 are further improved.

### [Examples of Fourth Embodiment]

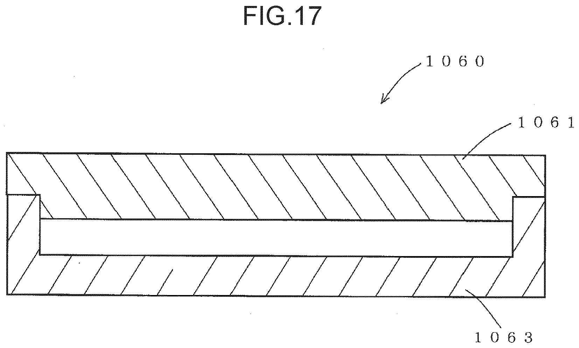

In order to confirm effects by this embodiment, fiber-reinforced-resin laminated molded articles in Examples and Comparative Example described below are prepared by using a shaping mold 1060 illustrated in FIG. 17.

In the shaping mold 1060, mold surfaces of an upper mold 1061 and a lower mold 1063 are flat. Plane size of the mold surface is 200 mm × 300 mm, and a dimension (corresponding to a thickness of a molded product) between the mold surface of the upper mold 1061 and the mold surface of the lower mold 1063 at the time of closing the mold is set to 1.5 mm.

### • Example 41

First, carbon fiber twill fabric (manufactured by TEIJIN LIMITED, product name: W-3101, fabric weight 200 g/m²) was cut into 200 mm × 300 mm and was soaked in the phenolic resin solution (manufactured by Sumitomo Bakelite Co., Ltd., product name: PR-55791B, resin concentration: 60 wt% ethanol solution). After being taken out, the carbon fiber twill fabric was dried naturally at the room temperature of 25 °C for 2 hours to prepare the carbon fiber fabric impregnated with the phenolic resin.

The thermosetting resin foam sheet with the continuous bubble structure (a urethane resin foam subjected to the cell membrane removal treatment, manufactured by INOAC CORPORATION, product name: MF-50, apparent density (JIS K 7222) 30 kg/m³, number of cells (JIS K 6400-1) 50 cells/25 mm, porosity 97.1%, thickness 0.4 mm) was cut into 200 mm × 300 mm and adhered to a surface of the carbon fiber fabric impregnated with the phenolic resin. The formula for calculating the porosity is as follows. Porosity = (true specific gravity of the urethane resin - apparent density) (≈ apparent density of urethane resin foam)/true specific gravity of urethane resin × 100

Here, the true specific gravity of the urethane resin is 1.05.

Thereafter, the carbon fiber fabric impregnated with the phenolic resin and the thermosetting resin foam sheet with the continuous bubble structure on the surface thereof were dried under the atmosphere at 60 °C for 1 hour so as to form the fiber-reinforced-resin material for forming a surface layer portion (the pre-preg) from the carbon fiber fabric impregnated with the phenolic resin and to bring the thermosetting resin foam sheet with the continuous bubble structure into a state of adhering to the surface thereof.

The shaping mold 1060 was heated to 140 °C. Then, the shaping mold 1060 was opened, and the mold release agent was applied to the mold surfaces. Thereafter, the compound for forming a base layer portion (SMC, manufactured by Mitsubishi Chemical Corporation, product name: STR120N131, thickness 2 mm, fiber content 53%), which was cut into size of 160 mm × 240 mm, the thermosetting resin foam sheet with the continuous bubble structure, and the fiber-reinforced-resin material for forming a surface layer portion (the pre-preg) were arranged in this order on the mold surface of the lower mold 1063. Then, the upper mold 1061 was placed to close the shaping mold 1060. A pressure at 5 MPa was applied thereto for 15 minutes at a temperature of 140 °C, the compound for forming a base layer portion, the thermosetting resin foam sheet with the continuous bubble structure, and the fiber-reinforced-resin material for forming a surface layer portion are heated and compressed, and the thermosetting resins in the compound for forming a base layer portion, the thermosetting resin foam sheet with the continuous bubble structure, and the fiber-reinforced-resin material for forming a surface layer portion were cured.

Then, after the shaping mold 1060 was cooled at the room temperature, the upper mold 1061 and the lower mold 1063 were opened to obtain a fiber-reinforced-resin laminated molded article in Example 41 formed as an integrated product including the surface layer portion, which was formed from the fiber-reinforced-resin material for forming a surface layer portion, the intermediate layer portion, which was formed from the thermosetting resin foam sheet with the continuous bubble structure, and the base layer portion, which was formed from the compound for forming a base layer portion.

### • Example 42

Except for the thickness of the thermosetting resin foam sheet with the continuous bubble structure in Example 41 being changed to 0.6 mm, a fiber-reinforced-resin laminated molded article in Example 42 was prepared in the same manner as that in Example 41.

### • Example 43

Except for the thickness of the thermosetting resin foam sheet with the continuous bubble structure in Example 41 being changed to 1.0 mm, a fiber-reinforced-resin laminated molded article in Example 43 was prepared in the same manner as that in Example 41.

### • Example 44

Except for the thickness of the thermosetting resin foam sheet with the continuous bubble structure in Example 41 being changed to 2.0 mm, a fiber-reinforced-resin laminated molded article in Example 44 was prepared in the same manner as that in Example 41.

### • Example 45

Except for the thickness of the thermosetting resin foam sheet with the continuous bubble structure in Example 41 being changed to 3.0 mm, a fiber-reinforced-resin laminated molded article in Example 45 was prepared in the same manner as that in Example 41.

### • Example 46

Except for the thermosetting resin foam sheet with the continuous bubble structure in Example 41 being changed to the urethane resin foam (manufactured by INOAC CORPORATION, product name: MF-80A), which was subjected to the cell membrane removal treatment and had the number of cells (JIS K 6400-1) 80 cells/25 mm, the porosity 95.2%, the apparent density (JIS K 7222) 75 kg/m³, and the thickness 1.0 mm, a fiber-reinforced-resin laminated molded article in Example 46 was prepared in the same manner as that in Example 41.

### • Example 47

Except for the thermosetting resin foam sheet with the continuous bubble structure in Example 41 being changed to the urethane resin foam (manufactured by INOAC CORPORATION, product name: MF-10), which was subjected to the cell membrane removal treatment and had the number of cells (JIS K 6400-1) 10 cells/25 mm, the porosity 97.3%, the apparent density (JIS K 7222) 30 kg/m³, and the thickness 1.0 mm, a fiber-reinforced-resin laminated molded article in Example 47 was prepared in the same manner as that in Example 41.

### • Example 48

Except for the thermosetting resin foam sheet with the continuous bubble structure in Example 1 being changed to the urethane resin foam (manufactured by INOAC CORPORATION, product name: MF-8), which was subjected to the cell membrane removal treatment and had the number of cells (JIS K 6400-1) 8 cells/25 mm, the porosity 97.4%, the apparent density (JIS K 7222) 30 kg/m³, and the thickness 1.0 mm, a fiber-reinforced-resin laminated molded article in Example 48 was prepared in the same manner as that in Example 41.

### • Example 49

Except for the thermosetting resin foam sheet with the continuous bubble structure in Example 41 being changed to the urethane resin foam (manufactured by INOAC CORPORATION, product name: MF-50), which was not subjected to the cell membrane removal treatment and had the number of cells (JIS K 6400-1) 50 cells/25 mm, the porosity 97.0%, the apparent density (JIS K 7222) 30 kg/m³, and the thickness 1.0 mm, a fiber-reinforced-resin laminated molded article in Example 49 was prepared in the same manner as that in Example 41.

### • Comparative Example

The thermosetting resin foam sheet with the continuous bubble structure in Example 41 was not provided. Except for the above, a fiber-reinforced-resin laminated molded article (without the intermediate layer portion) of Comparative Example was prepared in the same manner as that in Example 41.

An overall thickness (mm) and a flexural modulus (GPa) of the fiber-reinforced-resin laminated molded article in each of Examples and Comparative Example were measured, and external appearance thereof was determined.

The flexural modulus (GPa) was measured on the basis of JIS K 7074.

For the external appearance, a surface of the surface layer portion in the fiber-reinforced-resin laminated molded article was observed visually and determined for a void. In regard to fiber looseness (twisting), the following measurement was made by using a scale for a determination.

The fiber looseness was classified as "×" when fiber arrangement was disordered over an area of 2 mm or longer on the surface of the surface layer portion, and was classified as "∘" when the looseness was shorter than 2 mm.

The void was considered to be "Present" when a pore (a pinhole) was found in the thermosetting resin on the surface of the surface layer portion, and was considered to be "Absent" when no pore was found.

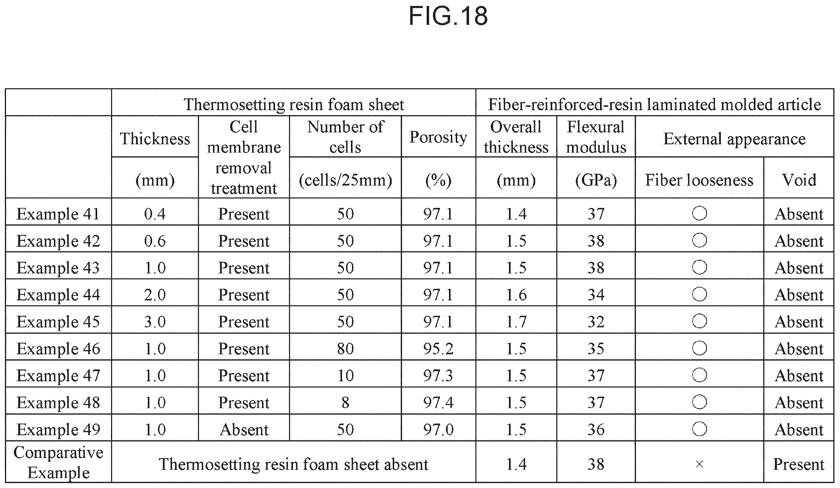

FIG. 18 illustrates a configuration of the thermosetting resin foam sheet as well as a measurement result and a result of the determination of the external appearance of the fiber-reinforced-resin laminated molded article in each Example and Comparative Example.

In regard to the fiber-reinforced-resin laminated molded articles in Examples 41 to 49, the overall thickness was 1.4 mm to 1.7 mm, the flexural modulus was 32 GPa to 38 GPa, the determination of the external appearance regarding the fiber looseness was " o", the void was "Absent", strength was sufficient, and the external appearance of the surface layer portion was favorable.

Meanwhile, in Comparative Example in which the intermediate layer portion was not provided and the surface layer portion and the base layer portion contacted each other, the overall thickness was 1.4 mm, the flexural modulus was 38 GPa, the determination of the external appearance regarding the fiber looseness was "×", the void was Present, and the strength was sufficient. However, the external appearance of the surface layer portion was poor.

As described above, according to the present disclosure, the fiber-reinforced-resin laminated molded article having the base layer portion, which is formed from the compound for forming a base layer portion with superior flowability, can have the surface layer portion with the favorable external appearance and without the disturbance of the fibers, the void, and the like. Therefore, the present disclosure is suited for the fiber-reinforced-resin laminated molded article for which the complex surface shape is desired.

The detailed description has been made so far on the present disclosure with reference to particular aspects. However, it is apparent to those skilled in the art that various changes and modifications can be made without departing from the spirit and the scope of the present invention.

The present application is based on Japanese Patent Application (No. 2019-165131) filed on September 11, 2019, Japanese Patent Application (No. 2019-178952) filed on September 30, 2019, Japanese Patent Application (No. 2020-59957) filed on March 30, 2020, and Japanese Patent Application (No. 2019-154490) filed on August 27, 2019, the whole of which are incorporated by reference. All of the documents referred to herein are incorporated by reference in its entirety.

### Description of Reference Numerals

10 Fiber-reinforced-resin composite molded article
11 Rigid layer
21 Shaping layer
31 Cured resin
60 Mold
61 Upper mold
63 Lower mold
110 Antibacterial composite molded article
111 Base material
121 Antibacterial resin
210 Antibacterial fiber-reinforced-resin composite molded article
211 Base material layer
211A Shaping compound
221 Antibacterial foam layer
221A Thermosetting resin foam impregnated with second thermosetting resin containing antibacterial agent
250 Shaping mold
251 Upper mold
253 Lower mold
1010, 1101, 1102 Fiber-reinforced-resin laminated molded article
1011, 1111, 1112 Surface layer portion
1011A, 1111A, 1112A Fiber-reinforced-resin material for forming a surface layer portion
1021, 1211, 1212 Base layer portion
1021A, 1211A, 1212A Compound for forming base layer portion
1031, 1311, 1312 Intermediate layer portion
1031A, 1311A, 1312A Thermosetting resin foam sheet with continuous bubble structure
1322 Second intermediate layer portion
1322A Second thermosetting resin foam sheet with continuous bubble structure
1050 Shaping mold
1051 Upper mold
1053 Lower mold
1055, 1057 Molding recess
1060 Shaping mold for Examples in fourth embodiment
1061 Upper mold for Examples in fourth embodiment
1063 Lower mold for Examples in fourth embodiment

## Claims

1. A fiber-reinforced-resin composite molded article, comprising:
a rigid layer formed from a fiber-reinforced-resin material for a rigid layer;
a shaping layer formed, on at least one surface of the rigid layer, from a shaping-layer compound that is formed from a thermosetting resin and shorter fibers than fibers included in the fiber-reinforced-resin material for a rigid layer; and
a cured resin formed by curing a liquid-state resin adhering to a surface of the shaping layer,
wherein the rigid layer and the shaping layer are formed by heating, compressing, and curing the fiber-reinforced-resin material for a rigid layer and the shaping-layer compound in a layered state together with the liquid-state resin.

2. The fiber-reinforced-resin composite molded article according to claim 1, wherein:
the fiber-reinforced-resin material for a rigid layer is pre-preg,
the shaping-layer compound is a sheet molding compound, and
the liquid-state resin is a thermosetting resin.

3. A method of producing a fiber-reinforced-resin composite molded article including: a rigid layer formed from a fiber-reinforced-resin material for a rigid layer; a shaping layer formed, on at least one surface of the rigid layer, from a shaping-layer compound that is formed from a thermosetting resin and shorter fibers than fibers included in the fiber-reinforced-resin material for a rigid layer; and a cured resin formed by curing a liquid-state resin adhering to a surface of the shaping layer, the method comprising:
applying the liquid-state resin to a surface of the shaping-layer compound or applying the liquid-state resin to a mold surface of a mold that presses against the surface of said shaping-layer compound at a time of clamping the mold; and
heating, compressing, and curing the fiber-reinforced-resin material for a rigid layer and the shaping-layer compound in a layered state together with the liquid-state resin using the mold.

4. The method of producing a fiber-reinforced-resin composite molded article according to claim 3, wherein:
the fiber-reinforced-resin material for a rigid layer is pre-preg,
the shaping-layer compound is a sheet molding compound, and
the liquid-state resin is a thermosetting resin.

5. An antibacterial composite molded article, comprising:
a base material comprising a sheet-like fiber-reinforced-resin material that is compressed and cured; and
an antibacterial resin provided on at least one surface side of the base material,
wherein the antibacterial resin is formed by heating, compressing, and curing a thermosetting resin containing the antibacterial agent in an integrated manner with the sheet-like fiber-reinforced-resin material.

6. The antibacterial composite molded article according to claim 5, wherein the sheet-like fiber-reinforced-resin material is formed from a sheet molding compound.

7. The antibacterial composite molded article according to claim 5 or claim 6, wherein an amount of the antibacterial agent on a surface of the antibacterial composite molded article is 0.1 g/m² to 8.0 g/m².

8. A method of producing an antibacterial composite molded article including: a base material comprising a sheet-like fiber-reinforced-resin material that is compressed and cured; and an antibacterial resin provided on at least one surface side of the base material, the method comprising:
adhering a thermosetting resin containing an antibacterial agent to at least one surface side of the sheet-like fiber-reinforced-resin material; and
heating, compressing, and curing the sheet-like fiber-reinforced-resin material, to which the thermosetting resin containing the antibacterial agent is adhered,
wherein an antibacterial resin, which is formed by curing the thermosetting resin containing the antibacterial agent, is provided on the at least one surface side of the base material.

9. The method of producing an antibacterial composite molded article according to claim 8, wherein:
the adhering comprises applying the thermosetting resin containing the antibacterial agent to the at least one surface side of the sheet-like fiber-reinforced-resin material so as to cause the thermosetting resin containing the antibacterial agent to adhere to the at least one surface side of the sheet-like fiber-reinforced-resin material, and
the heating, compressing, and curing comprises using a mold to heat, compress and cure the sheet-like fiber-reinforced-resin material, to which the thermosetting resin containing the antibacterial agent is adhered.

10. The method of producing an antibacterial composite molded article according to claim 8, wherein:
the adhering comprises applying the thermosetting resin containing the antibacterial agent to at least one mold surface of a mold, arranging the sheet-like fiber-reinforced-resin material in the mold, and bringing the thermosetting resin containing the antibacterial agent, which has been applied to the mold surface, into contact with the at least one surface side of the sheet-like fiber-reinforced-resin material so as to adhere thereto, and
the heating, compressing, and curing comprises using the mold to heat, compress and cure the sheet-like fiber-reinforced-resin material, to which the thermosetting resin containing the antibacterial agent is adhered.

11. The method of producing an antibacterial composite molded article according to any one of claims 8 to 10, wherein the sheet-like fiber-reinforced-resin material is formed from a sheet molding compound.

12. An antibacterial fiber-reinforced-resin composite molded article, comprising:
a base material layer formed from a shaping compound that is formed from fibers and a first thermosetting resin; and
an antibacterial foam layer formed from thermosetting resin foam impregnated with a second thermosetting resin containing an antibacterial agent, wherein:
a concentration of the antibacterial agent in the second thermosetting resin containing the antibacterial agent is 0.2 wt% to 2.0 wt%, and
the base material layer and the antibacterial foam layer are formed by integrating the shaping compound and the thermosetting resin foam impregnated with the second thermosetting resin containing the antibacterial agent in a layered state by thermocompression.

13. The antibacterial fiber-reinforced-resin composite molded article according to claim 12, wherein the antibacterial agent is formed by causing glass to carry a silver ion.

14. The antibacterial fiber-reinforced-resin composite molded article according to claim 12 or 13, wherein the shaping compound contains a curing agent, and the second thermosetting resin containing the antibacterial agent does not contain the curing agent.

15. The antibacterial fiber-reinforced-resin composite molded article according to any one of claims 12 to 14, wherein the second thermosetting resin is a radically polymerizable resin that is reactable with the first thermosetting resin.

16. A method of producing an antibacterial fiber-reinforced-resin composite molded article including: a base material layer formed from a shaping compound formed from fibers and a first thermosetting resin; and an antibacterial foam layer formed from thermosetting resin foam impregnated with a second thermosetting resin containing an antibacterial agent, the method comprising:
layering the shaping compound and the thermosetting resin foam impregnated with the second thermosetting resin containing the antibacterial agent;
curing the first thermosetting resin and the second thermosetting resin by thermocompression molding in a state in which the shaping compound and the thermosetting resin foam impregnated with the second thermosetting resin containing the antibacterial agent are compressed; and
integrally layering the base material layer and the antibacterial foam layer.

17. The method of producing an antibacterial fiber-reinforced-resin composite molded article according to claim 16, wherein the antibacterial agent is formed by causing glass to carry a silver ion.

18. The method of producing an antibacterial fiber-reinforced-resin composite molded article according to claim 16 or 17, wherein the shaping compound contains a curing agent, and the second thermosetting resin containing the antibacterial agent does not contain the curing agent.

19. The method of producing an antibacterial fiber-reinforced-resin composite molded article according to any one of claims 16 to 18, wherein the second thermosetting resin is a radically polymerizable resin that is reactable with the first thermosetting resin.

20. A fiber-reinforced-resin laminated molded article, comprising:
a surface layer portion formed from a fiber-reinforced-resin material for forming a surface layer portion;
a base layer portion formed from a compound for forming a base layer portion that is formed from a thermosetting resin and shorter fibers than fibers contained in the fiber-reinforced-resin material for forming a surface layer portion; and
an intermediate layer portion formed from a thermosetting resin foam sheet with a continuous bubble structure that is arranged between the fiber-reinforced-resin material for forming a surface layer portion and the compound for forming a base layer portion,
wherein the fiber-reinforced-resin material for forming a surface layer portion, the thermosetting resin foam sheet with the continuous bubble structure, and the compound for forming a base layer portion are cured by thermocompression and are integrally layered.

21. The fiber-reinforced-resin laminated molded article according to claim 20 further comprising:
a reinforcing layer portion between the base layer portion and the intermediate layer portion, the reinforcing layer portion being formed from a fiber-reinforced-resin material for forming a reinforcing layer portion,
wherein the fiber-reinforced-resin material for forming a surface layer portion, the thermosetting resin foam sheet with the continuous bubble structure, the fiber-reinforced-resin material for forming a reinforcing layer portion, and the compound for forming a base layer portion are cured by thermocompression and are integrally layered.

22. The fiber-reinforced-resin laminated molded article according to claim 21 further comprising:
a second intermediate layer portion between the reinforcing layer portion and the base layer portion, the second intermediate layer portion being formed from a second thermosetting resin foam sheet with a continuous bubble structure,
wherein the fiber-reinforced-resin material for forming a surface layer portion, the thermosetting resin foam sheet with the continuous bubble structure, the fiber-reinforced-resin material for forming a reinforcing layer portion, the second thermosetting resin foam sheet with the continuous bubble structure, and the compound for forming a base layer portion are cured by thermocompression and are integrally layered.

23. The fiber-reinforced-resin laminated molded article according to any one of claims 20 to 22, wherein:
the fiber-reinforced-resin material is pre-preg, and
the compound for forming a base layer portion is a sheet molding compound.

24. A method of producing a fiber-reinforced-resin laminated molded article having: a surface layer portion formed from a fiber-reinforced-resin material for forming a surface layer portion; a base layer portion formed from a compound for forming a base layer portion that is formed from a thermosetting resin and shorter fibers than fibers contained in the fiber-reinforced-resin material for forming a surface layer portion; and an intermediate layer portion formed from a thermosetting resin foam sheet with a continuous bubble structure arranged between the fiber-reinforced-resin material for forming a surface layer portion and the compound for forming a base layer portion, the method comprising:
layering, heating, and compressing the fiber-reinforced-resin material for forming a surface layer portion and the compound for forming a base layer portion with the thermosetting foam sheet with a continuous bubble structure interposed therebetween so as to be cured in a compressed state, thereby integrally layering the surface layer portion, the intermediate layer portion, and the base layer portion.

25. The method of producing a fiber-reinforced-resin laminated molded article according to claim 24, further comprising:
in the layering, arranging a fiber-reinforced-resin material for forming a reinforcing layer portion between the thermosetting foam sheet with the continuous bubble structure and the compound for forming a base layer portion; and
curing the fiber-reinforced-resin material for forming a surface layer portion, the thermosetting resin foam sheet with the continuous bubble structure, the fiber-reinforced-resin material for forming a reinforcing layer portion, and the compound for forming a base layer portion by thermocompression to effect integral layering and provide a reinforcing layer portion formed from the fiber-reinforced-resin material for forming a reinforcing layer portion between the intermediate layer portion and the base layer portion.

26. The method of producing a fiber-reinforced-resin laminated molded article according to claim 25 further comprising:
in the layering, arranging a second thermosetting resin foam sheet with a continuous bubble structure between the fiber-reinforced-resin material for forming a reinforcing layer portion and the compound for forming a base layer portion; and
curing the fiber-reinforced-resin material for forming a surface layer portion, the thermosetting resin foam sheet with the continuous bubble structure, the fiber-reinforced-resin material for forming a reinforcing layer portion, the second thermosetting resin foam sheet with the continuous bubble structure, and the compound for forming a base layer portion by thermocompression to effect integral layering and provide a second intermediate layer portion formed from the second thermosetting resin foam sheet with the continuous bubble structure between the reinforcing layer portion and the base layer portion.

27. The method of producing a fiber-reinforced-resin laminated molded article according to any one of claims 24 to 26, wherein:
the fiber-reinforced-resin material is pre-preg, and
the compound for forming a base layer portion is a sheet molding compound.
